# EUROPEAN PATENT APPLICATION

(11) **EP 4 786 023 A1**
(43) Date of publication of application: **05.08.2026**
(21) Application number: 24913578.1
(22) Date of filing: 06.12.2024
(51) Int. Cl.: A63F 13/235, A63F 13/2145, A63F 13/42, A63F 13/211, H04M 1/72415, G06V 20/40, H04N 21/422, G06F 3/048

(54) **ELECTRONIC DEVICE AND CONTROL METHOD THEREFOR**

(30) Priority: 29.12.2023 KR 20230196641; 23.02.2024 KR 20240026590
(71) Applicant: Samsung Electronics Co., Ltd., Suwon-si, Gyeonggi-do 16677 (KR)
(72) Inventor: OH, Seungbin, Suwon-si Gyeonggi-do 16677 (KR); KANG, Donghun, Suwon-si Gyeonggi-do 16677 (KR); LEE, Sangyoon, Suwon-si Gyeonggi-do 16677 (KR); JUNG, Jingun, Suwon-si Gyeonggi-do 16677 (KR); LEE, Youngah, Suwon-si Gyeonggi-do 16677 (KR)
(74) Representative: Appleyard Lees IP LLP
(86) International application number: PCT/KR2024/019982
(87) International publication number: WO 2025/143635

(57) **Abstract**

An electronic apparatus includes memory, a communication interface; and at least one processor, and the at least one processor is configured to, based on a user input for selecting an application being received, obtain screen information provided by the application, identify a type of the application based on the screen information provided by the application, identify key information for controlling the application based on the type of the application, generate an operation User Interface (UI) based on the key information, and transmit the operation UI to a terminal apparatus through the communication interface.

## Description

### [Technical Field]

The present disclosure relates to an electronic apparatus and a control method thereof, and more particularly, to an electronic apparatus for generating and providing a virtual operation UI and a control method thereof.

### [Background Art]

An electronic apparatus may be connected to a dedicated remote control apparatus. Since the remote control apparatus is generally manufactured by a manufacturing company, it inevitably has predetermined keys.

When the electronic apparatus is implemented as a TV, the remote control apparatus may be a device for channel adjustment and volume adjustment.

When the electronic apparatus is implemented as a game console, the remote control apparatus may be a game pad or a control pad for key operation.

Since a key structure of the remote control apparatus corresponding to each specific TV or specific game console is fixed, there is a problem in that a user has no choice but to use a specific remote control apparatus corresponding to the electronic apparatus.

One electronic apparatus may provide various services. For example, a smart TV may provide contents such as movies and dramas while simultaneously providing games. There has been inconvenience in using different remote control apparatuses for each service provided by the electronic apparatus.

### [Disclosure of Invention]

### [Solution to Problem]

The present disclosure has been made to improve the above-described problem, and aims to provide an electronic apparatus that generates a virtual operation UI and provides the same to a user terminal apparatus, and a control method thereof.

According to an embodiment, an electronic apparatus includes memory, a communication interface, and at least one processor, and the at least one processor is configured to, based on a user input for selecting an application being received, obtain screen information provided by the application, identify a type of the application based on the screen information provided by the application, identify key information for controlling the application based on the type of the application, generate an operation User Interface (UI) based on the key information; and transmit the operation UI to a terminal apparatus through the communication interface.

The at least one processor may be configured to obtain an image frame included in the screen information, identify at least one object included in the image frame, determine a type of the application based on the at least one object; and identify the key information including a key structure corresponding to the type of the application.

The at least one processor may be configured to, based on a selectable object among the at least one object being identified, identify the type of the application as a first type, and obtain the key information including a first key structure corresponding to the first type.

The selectable object may be a preset object representing an item selectable based on a user key input, the first type may be a content viewing service type, and the first key structure may include a navigation key, a first function key for selection, and a second function key for cancellation.

The at least one processor may be configured to, based on a movable object among the at least one object being identified, identify the type of the application as a second type, and obtain the key information including a second key structure corresponding to the second type.

The movable object may be a preset object whose displayed position is changeable based on a user key input, the second type may be a game service type, and the second key structure may include a navigation key and a plurality of function keys to which no function is mapped.

The at least one processor may be configured to obtain operation guide information corresponding to the application or log information corresponding to the application, and identify the key information including a key mapping value of each of the plurality of function keys based on at least one of the operation guide information or the log information.

The at least one processor may be configured to obtain operation guide information corresponding to the application, and identify the key information including at least one of a key shape, a key size, a key position, a key recognition method, or a key mapping value based on the operation guide information.

The at least one processor may be configured to obtain log information corresponding to the application, obtain a key usage frequency based on the log information, and identify the key information including at least one of a key shape, a key size, a key position, a key recognition method, or a key mapping value based on the key usage frequency.

The at least one processor may be configured to obtain tilt information of the terminal apparatus through the communication interface, and based on identifying that the terminal apparatus has rotated in a preset direction based on the tilt information, change the operation UI.

According to an embodiment, a method of controlling an electronic apparatus includes, based on a user input for selecting an application being received, obtaining screen information provided by the application, identifying a type of the application based on the screen information provided by the application, identifying key information for controlling the application based on the type of the application, generating an operation User Interface (UI) based on the key information, and transmitting the operation UI to a terminal apparatus.

The identifying a type of the application may include obtaining an image frame included in the screen information, identifying at least one object included in the image frame, and determining a type of the application based on the at least one object, and the identifying key information may include identifying the key information including a key structure corresponding to the type of the application.

The identifying a type of the application may include, based on a selectable object among the at least one object being identified, identifying the type of the application as a first type, and the identifying key information may include obtaining the key information including a first key structure corresponding to the first type.

The selectable object may be a preset object representing an item selectable based on a user key input, the first type may be a content viewing service type, and the first key structure may include a navigation key, a first function key for selection, and a second function key for cancellation.

The identifying a type of the application may include, based on a movable object among the at least one object being identified, identifying the type of the application as a second type, and the identifying key information may include obtaining the key information including a second key structure corresponding to the second type.

The movable object may be a preset object whose displayed position is changeable based on a user key input, the second type may be a game service type, and the second key structure may include a navigation key and a plurality of function keys to which no function is mapped.

The identifying key information may include obtaining operation guide information corresponding to the application or log information corresponding to the application, and identifying the key information including a key mapping value of each of the plurality of function keys based on at least one of the operation guide information or the log information.

The identifying key information may include obtaining operation guide information corresponding to the application, and identifying the key information including at least one of a key shape, a key size, a key position, a key recognition method, or a key mapping value based on the operation guide information.

The identifying key information may include obtaining log information corresponding to the application, obtaining a key usage frequency based on the log information, and identifying the key information including at least one of a key shape, a key size, a key position, a key recognition method, or a key mapping value based on the key usage frequency.

The control method may include obtaining tilt information of the terminal apparatus through the communication interface, and based on identifying that the terminal apparatus has rotated in a preset direction based on the tilt information, changing the operation UI.

### [Brief Description of Drawings]

FIG. 1 is a view provided to explain a system including an electronic apparatus and a terminal apparatus according to an embodiment;
FIG. 2 is a view provided to explain a system including an electronic apparatus and a plurality of terminal apparatuses according to an embodiment;
FIG. 3 is a block diagram illustrating an electronic apparatus according to an embodiment;
FIG. 4 is a block diagram provided to explain specific configuration of the electronic apparatus of FIG. 3 according to an embodiment;
FIG. 5 is a view provided to explain an electronic apparatus according to an embodiment;
FIG. 6 is a view provided to explain an operation for connecting with a terminal apparatus according to an embodiment;
FIG. 7 is a view provided to explain an operation for connecting with a terminal apparatus according to an embodiment;
FIG. 8 is a view provided to explain an operation UI corresponding to an application according to an embodiment;
FIG. 9 is a view provided to explain an operation UI according to an operation pad according to an embodiment;
FIG. 10 is a view provided to explain an operation of providing an operation UI according to an embodiment;
FIG. 11 is a view provided to explain an operation of identifying key information according to an embodiment;
FIG. 12 is a view provided to explain an operation of identifying a key structure of key information according to an embodiment;
FIG. 13 is a view provided to explain an operation of identifying key information according to an embodiment;
FIG. 14 is a view provided to explain an application type according to an embodiment;
FIG. 15 is a view provided to explain a frequency of key usage based on operation guide information according to an embodiment;
FIG. 16 is a view provided to explain log information according to an embodiment;
FIG. 17 is a view provided to explain a touch setting of an operation UI according to an embodiment;
FIG. 18 is a view provided to explain an operation of changing touch sensitivity according to an embodiment;
FIG. 19 is a view provided to explain an operation of changing an operation UI according to a tilt of a terminal apparatus according to an embodiment;
FIG. 20 is a view provided to explain an operation of changing an operation UI using log information according to an embodiment;
FIG. 21 is a view provided to explain a guide screen for changing an operation UI according to an embodiment;
FIG. 22 is a view provided to explain an operation of changing an operation UI using log information according to an embodiment;
FIG. 23 is a view provided to explain an operation of displaying a guide screen related to an operation UI according to an embodiment;
FIG. 24 is a view provided to explain an operation of displaying a guide screen related to an operation UI according to an embodiment;
FIG. 25 is a view provided to explain an operation of displaying a guide screen related to an operation UI according to an embodiment;
FIG. 26 is a view provided to explain an operation of displaying a guide screen related to an operation UI according to an embodiment;
FIG. 27 is a view provided to explain an operation of changing an operation UI according to an embodiment;
FIG. 28 is a view provided to explain an operation of changing an operation UI according to an embodiment;
FIG. 29 is a view provided to explain an operation of receiving screen information through a server according to an embodiment; and
FIG. 30 is a view provided to explain a method of controlling an electronic apparatus according to an embodiment.

### [Mode for Invention]

Hereinafter, the present disclosure will be described in detail with reference to the accompanying drawings.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (e.g., elements such as numeric values, functions, operations, or components), but do not exclude presence of additional features.

The expression "at least one of A or/and B" should be understood as indicating any one of "A", "B" and "both of A and B.".

The expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

The term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by at least one processor except for a 'module' or a 'unit' that needs to be implemented by specific hardware.

In this specification, a term 'user' may refer to a person using an electronic apparatus or an apparatus used by the person.

Hereinafter, an embodiment of the present disclosure will be described in greater detail with reference to the accompanying drawings.

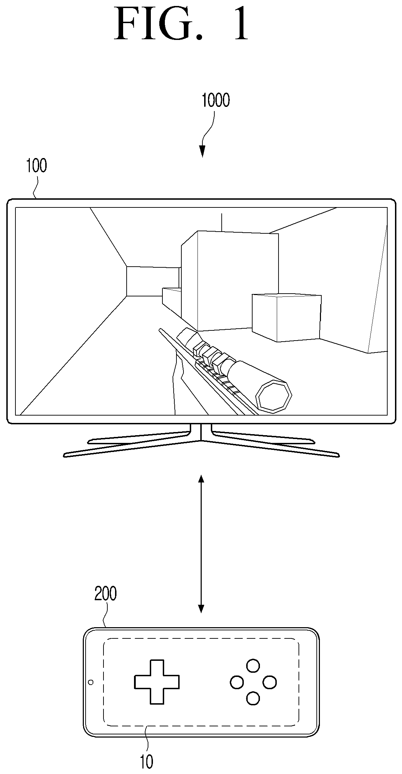

FIG. 1 is a view provided to explain a system including an electronic apparatus 100 and a terminal apparatus 200 according to an embodiment.

FIG. 1 is a view provided to explain a system 1000 including the electronic apparatus 100 and the terminal apparatus 200.

The electronic apparatus 100 may include a display. The electronic apparatus 100 may display content. The content may include a screen related to an application executed in the electronic apparatus 100. The content may include an image frame. The content may refer to a still image or a moving image. For example, the content may refer to a game, broadcast content, educational content, or the like. The content is not limited to any specific embodiment.

The terminal apparatus 200 may include a display. The terminal apparatus 200 may display, on the display, an operation UI 10 related to content displayed on the electronic apparatus 100. The operation UI 10 may include at least one UI for controlling content displayed on the electronic apparatus 100. The operation UI 10 may vary according to the content displayed on the electronic apparatus 100. The operation UI 10 may vary according to the application executed on the electronic apparatus 100. The terminal apparatus 200 may be described as an external apparatus.

The operation UI 10 may be described as a UI related to control, a UI for control, a manipulation UI, a UI related to manipulation, a UI for manipulation, or the like.

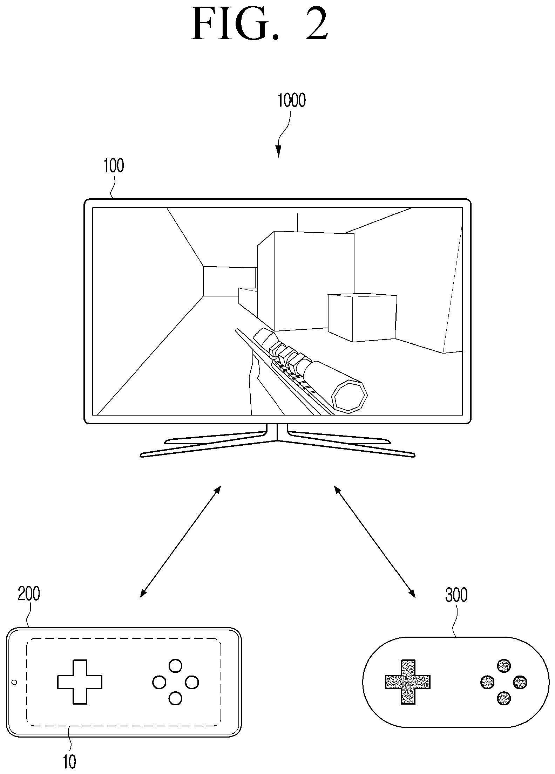

FIG. 2 is a view provided to explain a system 2000 including the electronic apparatus 100 and a plurality of terminal apparatuses 200 according to an embodiment.

Referring to FIG. 2, the electronic apparatus 100 may be simultaneously connected to the terminal apparatus 200 and an operation pad 300. When at least one user key input is received from the terminal apparatus 200 or the operation pad 300, the electronic apparatus 100 may provide a screen corresponding to the received user key input.

It is assumed that A content is displayed on the electronic apparatus 100. A dedicated controller for operating the A content may exist. It is assumed that the dedicated controller is the operation pad 300. The operation pad 300 may refer to a physically existing hardware device.

The operation pad 300 may include at least one button (or element). UI information corresponding to the operation pad 300 may include information related to buttons of the operation pad 300. The UI information may include at least one of a shape, position, area, size, color, or transparency of the buttons.

Based on the UI information corresponding to the operation pad 300, the electronic apparatus 100 or the terminal apparatus 200 may display the operation UI 10.

According to various embodiments, the arrangement structure of the buttons included in the operation pad 300 may be displayed on the electronic apparatus 100 or the terminal apparatus 200 as it is.

According to various embodiments, the arrangement structure of the buttons included in the operation pad 300 may be partially changed and displayed on the electronic apparatus 100 or the terminal apparatus 200. This is because the sizes of the electronic apparatus 100 and the terminal apparatus 200 are different from each other. If the UI information corresponding to the operation pad 300 is displayed without modification, there may be a problem in that a user experiences inconvenience due to the arrangement or size of the operation UI 10.

Accordingly, the electronic apparatus 100 or the terminal apparatus 200 may display the operation UI 10 by partially modifying the UI information of the operation pad 300.

The operation pad 300 may be described as a remote control apparatus, a joystick, a game pad, an operation pen, or the like.

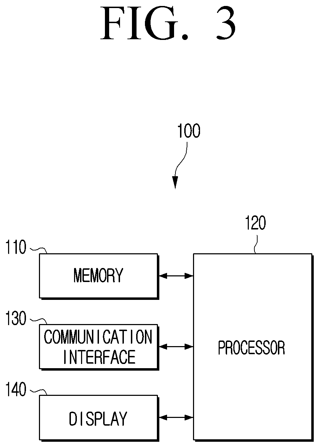

FIG. 3 is a block diagram illustrating the electronic apparatus 100 according to an embodiment.

The electronic apparatus 100 may include at least one of memory 110, at least one processor 120, or a communication interface 130.

The memory 110 may store an application, screen information provided by the application, and the like. The memory 110 may include at least one instruction executed by the at least one processor 120.

The at least one processor 120 may receive a user input for selecting an application. The at least one processor 120 may execute the application selected based on the user input.

The at least one processor 120 may obtain screen information provided by the application.

The screen information may represent various types of information related to a screen for indicating a service provided by the application. The screen information may be information related to execution of the application. The at least one processor 120 may output the screen information through the display 140.

The at least one processor 120 may identify a type of the application based on the screen information provided by the application. The type of the application may represent a classification criterion predetermined by a user. The type may be described as a category, a group, or the like.

The at least one processor 120 may identify key information for controlling the application based on the type of the application.

The key information may be information used to generate the operation UI. The key information may include various types of information related to keys included in the operation UI. The key information may include at least one of a key structure, a key shape, a key size, a key position, a key recognition method, or a key mapping value.

The at least one processor 120 may generate the operation UI based on the key information. The at least one processor 120 may transmit the operation UI to the terminal apparatus through the communication interface 130.

The at least one processor 120 may obtain an image frame included in the screen information. The at least one processor 120 may obtain at least one image frame provided by the application.

In one example, the at least one processor 120 may determine the type of the application based on one image frame.

In one example, the at least one processor 120 may determine the type of the application based on a plurality of image frames. The at least one processor 120 may receive image frames for a threshold time. The at least one processor 120 may analyze each of the plurality of image frames received during the threshold time, and identify the type of the application by combining analysis results.

The at least one processor 120 may identify at least one object included in an image frame. The at least one processor 120 may determine the type of the application based on the at least one object.

According to an embodiment, the at least one processor 120 may identify all detailed elements included in the key information based on the type of the application.

According to an embodiment, the at least one processor 120 may first identify only a key structure among a plurality of elements included in the key information based on the type of the application. The at least one processor 120 may identify key information including a key structure corresponding to the type of the application.

When a selectable object is identified among the at least one object, the at least one processor 120 may identify the type of the application as a first type.

The at least one processor 120 may obtain key information including a first key structure corresponding to the first type.

The selectable object may be a preset object representing an item selectable based on a user key input.

The selectable object may represent an object selectable by a user among a plurality of objects existing in the image frame. The selectable object may be an object for which a user setting is predetermined. For example, the selectable object may represent a menu object, an item object, or the like.

The selectable object may represent a preset-shaped object having an area equal to or greater than a threshold area. For example, the selectable object may be determined as a rectangular object having a horizontal length of 10 pixels or more and a vertical length of 10 pixels or more. The horizontal length, vertical length, rectangular shape, and detailed numerical values may be changed according to a user setting.

The first type may be a content viewing service type. The content viewing service may represent a type of viewing video content such as a movie or a drama. The content viewing service may represent a service for watching (or viewing) video.

The first key structure may include a navigation key, a first function key for selection, and a second function key for cancellation.

When a movable object is identified among the at least one object, the at least one processor 120 may identify the type of the application as a second type.

The at least one processor 120 may obtain key information including a second key structure corresponding to the second type.

The movable object may be a preset object whose displayed position may be changed based on a user key input.

The second type may be a game service type.

The second key structure may include a navigation key and a plurality of function keys to which no function is mapped.

The movable object may represent at least one object having a movable attribute among a plurality of objects identified in an image frame. The movable object may be an object having movement in a game. The movable object may be an object for which a user setting is predetermined. For example, the movable object may be an animal object, a person object, a ball object, a vehicle object, or the like.

The function keys included in the second key structure may not have functions mapped thereto. The fact that functions are not mapped may indicate that a function for each function key is not determined. For function keys for which functions are not determined, the at least one processor 120 may determine a function (or a key mapping value) corresponding to each function key using additional information. The additional information may include at least one of operation guide information or log information corresponding to the application.

The at least one processor 120 may obtain operation guide information corresponding to the application or log information corresponding to the application. The at least one processor 120 may identify key information including a key mapping value of each of the plurality of function keys based on at least one of the operation guide information or the log information.

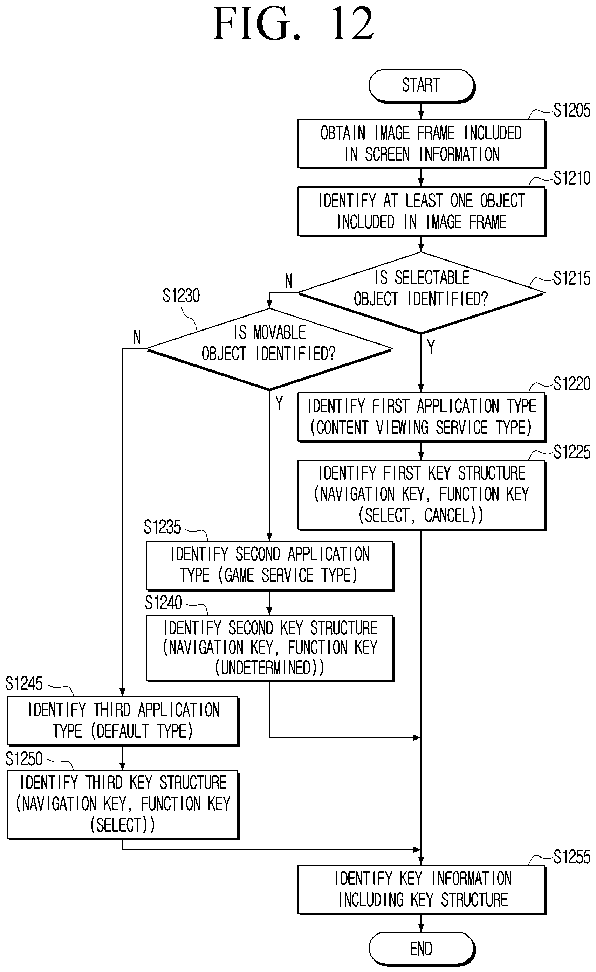

A detailed description related to the key structure will be described with reference to FIG. 12.

In the above description, an operation of determining the key structure has been described. In addition to the key structure, additional information may be required to generate the operation UI. The additional information may include at least one of operation guide information or log information corresponding to the application.

The at least one processor 120 may obtain operation guide information corresponding to the application. The at least one processor 120 may identify key information including at least one of a key shape, a key size, a key position, a key recognition method, or a key mapping value based on the operation guide information.

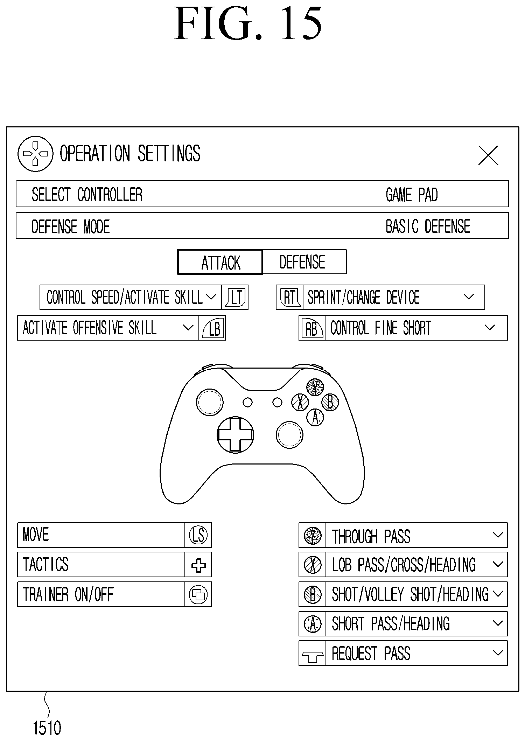

A detailed description related to the operation guide information will be described with reference to FIG. 15.

The at least one processor 120 may obtain log information corresponding to the application. The at least one processor 120 may obtain key usage frequency based on the log information. The at least one processor 120 may identify key information including at least one of a key shape, a key size, a key position, a key recognition method, or a key mapping value based on the key usage frequency.

The log information may be divided into first log information and second log information according to a generation time.

The first log information may be information already stored in the memory 110. The first log information may represent information actually input by a user using the operation pad 300 corresponding to the application before generation of the operation UI.

The second log information may be information collected according to usage history of the operation UI. The second log information may be information input by a user after generation of the operation UI. The second log information may be information regarding a user key input that has been input according to the operation UI displayed on the terminal apparatus 200.

In the following description, one log information has been described in each embodiment. However, in an embodiment in which the first log information and the second log information are used together, ordinal numbers may be described.

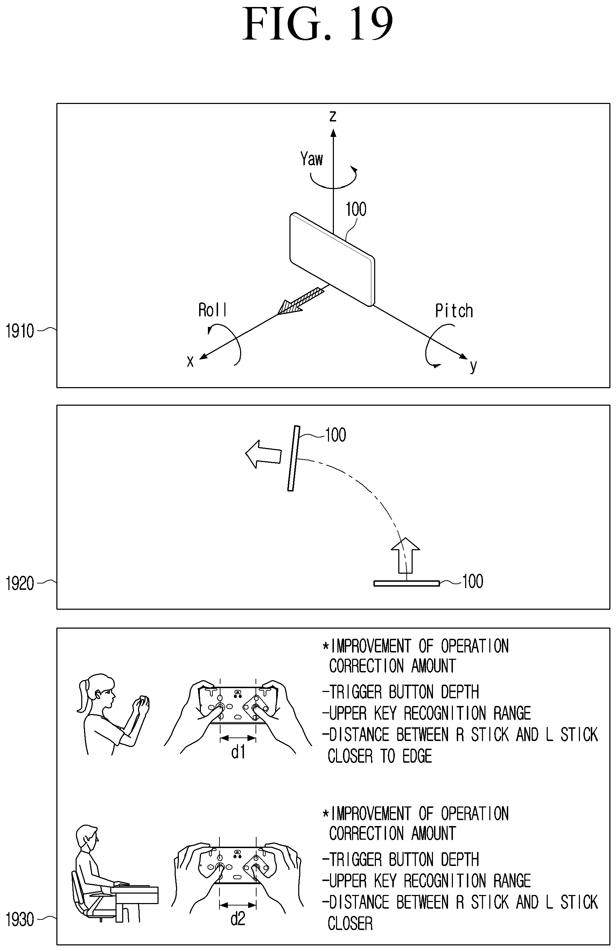

The at least one processor 120 may obtain tilt information of the terminal apparatus through the communication interface 130. When it is identified, based on the tilt information, that the terminal apparatus has rotated in a preset direction, the at least one processor 120 may change the operation UI. A detailed description related thereto will be described with reference to FIG. 19.

According to various embodiments, the electronic apparatus 100 may generate an operation UI without separately identifying an application type. The at least one processor 120 may generate the operation UI based on at least one of operation guide information or log information. In the following description, it is described that a key structure is first identified based on a type of an application, and a key shape and the like are determined using additional information (operation guide information or log information). However, this may be only one embodiment. The at least one processor 120 may generate key information directly without identifying the application type.

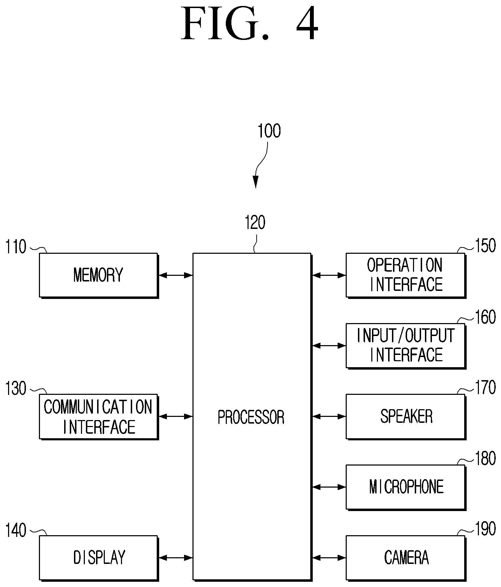

FIG. 4 is a block diagram provided to explain specific configuration of the electronic apparatus 100 of FIG. 3 according to an embodiment.

Referring to FIG. 4, the electronic apparatus 100 may include at least one of the memory 110, the at least one processor 120, the communication interface 130, the display 140, an operation interface 150, an input/output interface 160, a speaker 170, a microphone 180, or a camera 190.

The memory 110 may be implemented as internal memory such as read-only memory (ROM) (for example, electrically erasable programmable read-only memory (EEPROM)) or random access memory (RAM) included in the at least one processor 120, or may be implemented as memory separate from the at least one processor 120. The memory 110 may be implemented as memory embedded in the electronic apparatus 100 or as detachable memory attachable to and detachable from the electronic apparatus 100 according to a data storage purpose. For example, data for driving the electronic apparatus 100 may be stored in memory embedded in the electronic apparatus 100, and data for extension functions of the electronic apparatus 100 may be stored in detachable memory attachable to and detachable from the electronic apparatus 100.

In the case of memory embedded in the electronic apparatus 100, the memory may be implemented as at least one of volatile memory (for example, dynamic random access memory (DRAM), static random access memory (SRAM), or synchronous dynamic random access memory (SDRAM)), non-volatile memory (for example, one time programmable read-only memory (OTPROM), programmable read-only memory (PROM), erasable programmable read-only memory (EPROM), electrically erasable programmable read-only memory (EEPROM), mask read-only memory (mask ROM), flash read-only memory (flash ROM), flash memory such as NAND flash or NOR flash), a hard drive, or a solid state drive (SSD). In the case of memory detachable from the electronic apparatus 100, the memory may be implemented in the form of a memory card (for example, compact flash (CF), secure digital (SD), micro secure digital (Micro-SD), mini secure digital (Mini-SD), extreme digital (xD), multi-media card (MMC)), or an external memory connectable to a universal serial bus (USB) port (for example, USB memory), or the like.

The memory 110 may store at least one instruction. Based on instructions stored in the memory 110, the at least one processor 120 may perform various operations.

The at least one processor 120 may be implemented as a digital signal processor (DSP), a microprocessor, or a time controller (TCON). However, the at least one processor 120 is not limited thereto, and may include or be defined as one or more of a central processing unit (CPU), a micro controller unit (MCU), a micro processing unit (MPU), a controller, an application processor (AP), a graphics processing unit (GPU), a communication processor (CP), or an advanced reduced instruction set computer (RISC) machines (ARM) processor. The at least one processor 120 may be implemented as a system on chip (SoC) or a large scale integration (LSI) having a processing algorithm embedded therein, or may be implemented in the form of a field programmable gate array (FPGA). The at least one processor 120 may perform various functions by executing computer executable instructions stored in the memory.

The communication interface 130 is configured to perform communication with various types of external apparatuses according to various types of communication methods. The communication interface 130 may include a wireless communication module or a wired communication module. Each communication module may be implemented in the form of at least one hardware chip.

The wireless communication module may be a module for performing communication wirelessly with an external apparatus. For example, the wireless communication module may include at least one of a Wi-Fi module, a Bluetooth module, an infrared communication module, or another communication module.

The Wi-Fi module and the Bluetooth module may perform communication according to a Wi-Fi method and a Bluetooth method, respectively. When using the Wi-Fi module or the Bluetooth module, various connection information such as a service set identifier (SSID) and a session key may first be transmitted and received, and communication connection may be established using the connection information, and then various information may be transmitted and received.

The infrared communication module performs communication according to infrared data association (IrDA) technology for wirelessly transmitting data at short range using infrared rays between visible light and millimeter waves.

The other communication module may include at least one communication chip for performing communication according to various wireless communication standards such as Zigbee, third generation (3G), third generation partnership project (3GPP), long term evolution (LTE), long term evolution advanced (LTE-A), fourth generation (4G), or fifth generation (5G).

The wired communication module may be a module for performing communication with an external apparatus by wire. For example, the wired communication module may include at least one of a local area network (LAN) module, an Ethernet module, a pair cable, a coaxial cable, an optical fiber cable, or an ultra wide-band (UWB) module.

According to various embodiments, the communication interface 130 may use the same communication module (for example, a Wi-Fi module) to perform communication with an external apparatus such as a remote control apparatus and an external server.

According to various embodiments, the communication interface 130 may use different communication modules to perform communication with an external apparatus such as a remote control apparatus and an external server. For example, the communication interface 130 may use at least one of an Ethernet module or a Wi-Fi module to perform communication with an external server, and may use a Bluetooth module to perform communication with an external apparatus such as a remote control apparatus. However, this is only one embodiment, and when performing communication with a plurality of external apparatuses or external servers, the communication interface 130 may use at least one of various communication modules.

The display 140 may be implemented as various types of displays such as a liquid crystal display (LCD), an organic light emitting diode display (OLED), or a plasma display panel (PDP). The display 140 may further include a driving circuit implemented in the form of an amorphous silicon thin film transistor (a-Si TFT), a low temperature poly silicon thin film transistor (LTPS TFT), or an organic thin film transistor (OTFT), and a backlight unit. The display 140 may be implemented as a touch screen combined with a touch sensor, a flexible display, or a three-dimensional display (3D display). According to an embodiment of the present disclosure, the display 140 may include not only a display panel for outputting an image but also a bezel for housing the display panel. In particular, according to an embodiment of the present disclosure, the bezel may include a touch sensor for detecting user interaction.

The operation interface 150 may be implemented as a device such as a button, a touch pad, a mouse, or a keyboard, or may be implemented as a touch screen capable of performing both the display function and the operation input function described above. The button may be various types of buttons such as a mechanical button, a touch pad, or a wheel formed in any area of a front portion, a side portion, or a rear portion of an exterior of a main body of the electronic apparatus 100.

The input/output interface 160 may be any one of a high definition multimedia interface (HDMI), a mobile high-definition link (MHL), a universal serial bus (USB), a display port (DP), Thunderbolt, a video graphics array (VGA) port, a red green blue (RGB) port, a D-subminiature (D-SUB), or a digital visual interface (DVI). The input/output interface 160 may input and output at least one of an audio signal or a video signal. According to an implementation example, the input/output interface 160 may include a port for inputting and outputting only an audio signal and a port for inputting and outputting only a video signal as separate ports, or may be implemented as a single port for inputting and outputting both an audio signal and a video signal. The electronic apparatus 100 may transmit at least one of an audio signal or a video signal to an external apparatus (for example, an external display apparatus or an external speaker) through the input/output interface 160. An output port included in the input/output interface 160 may be connected to an external apparatus, and the electronic apparatus 100 may transmit at least one of an audio signal or a video signal to the external apparatus through the output port.

The input/output interface 160 may be connected to the communication interface 130. The input/output interface 160 may transmit information received from an external apparatus to the communication interface 130 or transmit information received through the communication interface 130 to the external apparatus.

The speaker 170 may be a component for outputting various audio data as well as various notification sounds or voice messages.

The microphone 180 is configured to receive a user voice or other sounds and convert the received sound into audio data. The microphone 180 may receive a user voice in an activated state. For example, the microphone 180 may be integrally formed at an upper portion, a front direction, or a side direction of the electronic apparatus 100. The microphone 180 may include various components such as a microphone configured to collect a user's voice in an analog form, an amplifier circuit configured to amplify the collected user's voice, an analog-to-digital (A/D) conversion circuit configured to sample the amplified user's voice and convert the sampled voice into a digital signal, and a filter circuit configured to remove a noise component from the converted digital signal.

The camera 190 is configured to capture an image of a subject and generate a captured image, and the captured image includes both a moving image and a still image. The camera 190 may obtain an image of at least one external apparatus, and may be implemented as a camera, a lens, an infrared sensor, or the like.

The camera 190 may include a lens and an image sensor. Types of lenses may include a general-purpose lens, a wide-angle lens, or a zoom lens, and may be determined according to a type, characteristics, and usage environment of the electronic apparatus 100. As the image sensor, a complementary metal oxide semiconductor (CMOS) or a charge coupled device (CCD) may be used.

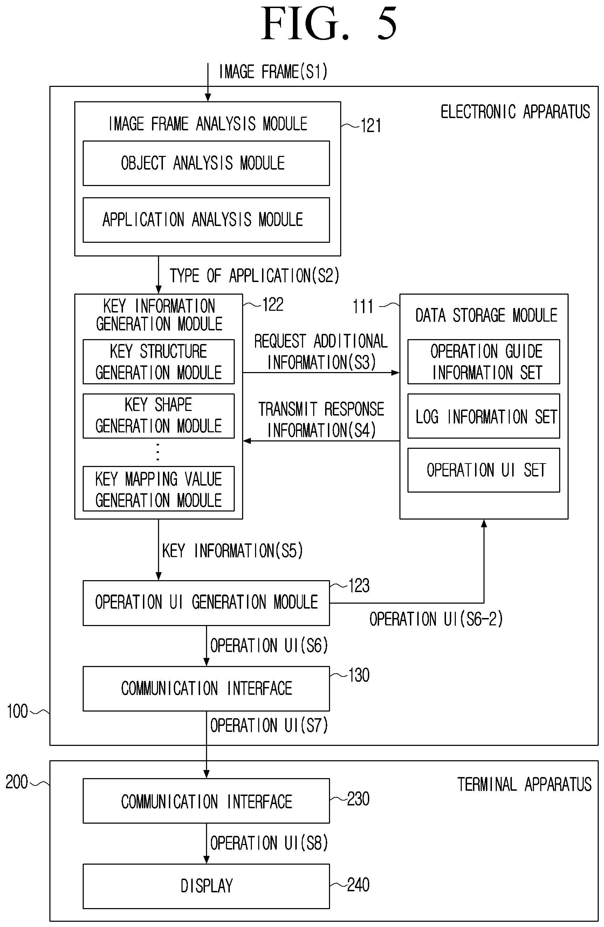

FIG. 5 is a view provided to explain an electronic apparatus according to an embodiment.

Referring to FIG. 5, the electronic apparatus 100 may include at least one of an image frame analysis module 121, a key information generation module 122, an operation UI generation module 123, or a data storage module 111. The electronic apparatus 100 may additionally include the communication interface 130.

The image frame analysis module 121 may receive an image frame provided by an application (S1).

The image frame analysis module 121 may analyze the image frame and identify or obtain a type of the application.

The image frame analysis module 121 may include at least one of an object analysis module or an application analysis module.

The object analysis module may extract an object included in the image frame, and analyze a characteristic (or an attribute) of the object. The object analysis module may generate an analysis result indicating what characteristic the object included in the image frame has.

The application analysis module may identify the type of the application based on the analysis result generated by the object analysis module.

In one example, when a selectable object is identified in the analysis result, the application analysis module may identify the application as a first type (a content viewing service type).

In one example, when a movable object is identified in the analysis result, the application analysis module may identify the application as a second type (a game service type).

The image frame analysis module 121 may transmit the type of the application generated by the application analysis module to the key information generation module 122 (S2).

The key information generation module 122 may receive the type of the application from the image frame analysis module 121. The key information generation module 122 may generate key information based on the type of the application.

The key information generation module 122 may generate information for representing at least one key constituting the operation UI. The key information generation module 122 may include at least one of a key structure generation module, a key shape generation module, a key size generation module, a key position generation module, a key recognition method generation module, or a key mapping value generation module.

The key structure generation module may identify a key structure based on the type of the application transmitted from the image frame analysis module 121.

The key information generation module 122 may require additional information in order to additionally determine information other than the key structure (such as key shape, key size, key position, key recognition method, or key mapping value).

The key information generation module 122 may transmit a signal requesting additional information to the data storage module 111 (S3).

The data storage module 111 may receive the signal requesting additional information from the key information generation module 122.

The data storage module 111 may be a module for storing various information related to the operation UI. The data storage module 111 may include at least one of a first data set including at least one operation guide information, a second data set including at least one log information, or a third data set including at least one previously generated operation UI.

When additional information is received, the data storage module 111 may transmit response information to the key information generation module 122 (S4). The response information may include data stored in at least one of the first data set, the second data set, or the third data set.

The key information generation module 122 may receive the response information from the data storage module 111. The key information generation module 122 may additionally determine information other than the key structure (such as key shape, key size, key position, key recognition method, or key mapping value) based on the response information received from the data storage module 111.

According to various embodiments, even when the key structure has already been determined, the key information generation module 122 may change the key structure based on the response information.

According to various embodiments, when the key structure has not been determined, the key information generation module 122 may newly identify the key structure based on the response information.

When the key information is generated, the key information generation module 122 may transmit the key information to the operation UI generation module 123 (S5).

The operation UI generation module 123 may generate an operation UI for controlling the application based on the key information. The operation UI may be described as a virtual operation UI or a virtual operation screen.

The operation UI generation module 123 may transmit the generated operation UI to the communication interface 130 (S6). The communication interface 130 may transmit the operation UI to the terminal apparatus 200 (S7).

The terminal apparatus 200 may include at least one of a communication interface 230 or a display 240.

The terminal apparatus 200 may receive the operation UI from the electronic apparatus 100 through the communication interface 230. The communication interface 230 may transmit the operation UI to the display 240 (S8). The terminal apparatus 200 may output the operation UI through the display.

According to various embodiments, the operation UI generation module 123 may transmit the operation UI to the data storage module 111. The data storage module 111 may store the generated operation UI in the third data set. The data storage module 111 may provide the previously stored operation UI according to a request (or a call).

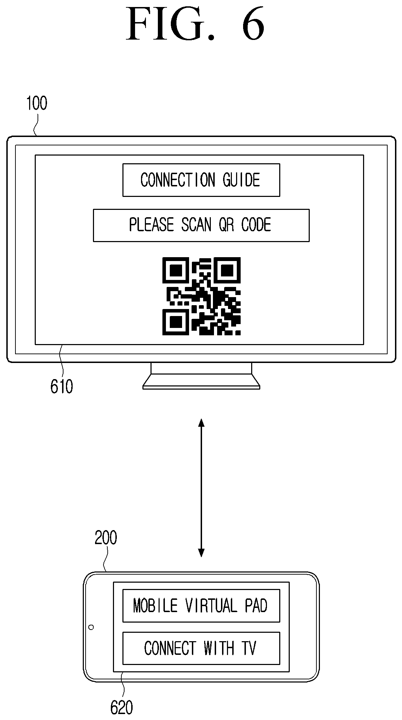

FIG. 6 is a view provided to explain an operation for connecting with the terminal apparatus 200 according to an embodiment.

Referring to FIG. 6, the electronic apparatus 100 may perform communication connection with the terminal apparatus 200. The electronic apparatus 100 may provide a guide screen 610 for communication connection with the terminal apparatus 200.

The guide screen 610 may include a quick response (QR) code including information for connection with the electronic apparatus 100 and text indicating a guide related to connection (for example, "Please scan the QR code").

When the QR code included in the guide screen 610 is scanned, the terminal apparatus 200 may display a guide screen 620 corresponding to the QR code. The guide screen 620 may be a screen indicating connection with the electronic apparatus 100. The guide screen 620 may include information indicating that a virtual pad (or virtual operation UI) is provided or a user interface (UI) for confirming connection with the electronic apparatus 100.

When a user input is received through the guide screen 620 displayed on the terminal apparatus 200, the terminal apparatus 200 may transmit a signal requesting connection to the electronic apparatus 100. When the user input is received, the electronic apparatus 100 and the terminal apparatus 200 may be mutually connected through communication.

According to various embodiments, the electronic apparatus 100 and the terminal apparatus 200 may be connected through communication by scanning only the QR code without additional user input.

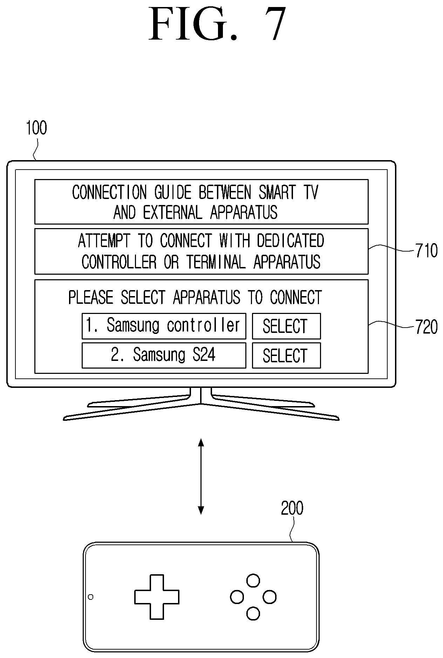

FIG. 7 is a view provided to explain an operation for connecting with the terminal apparatus 200 according to an embodiment.

Referring to FIG. 7, the electronic apparatus 100 may display a connection guide screen for connection with an external apparatus in relation to displayed content. When content displayed on the electronic apparatus 100 is specified (or selected), a device for operating the specified content may be required. When a dedicated controller (hereinafter, referred to as an operation pad 300) exists, the operation pad 300 should be connected to the electronic apparatus 100. If the operation pad 300 exists but is not connected to the electronic apparatus 100, the electronic apparatus 100 may display a control UI using the terminal apparatus 200. A user may operate content displayed on the electronic apparatus 100 using the terminal apparatus 200 instead of the operation pad 300.

The electronic apparatus 100 may display a connection guide screen (or guide screen) for connection with the operation pad 300 or the terminal apparatus 200. The connection guide screen may include at least one of a UI 710 indicating that connection with a dedicated controller or an external apparatus is being attempted, or a UI 720 indicating a list of connectable devices.

The UI 710 may include text. According to an implementation example, the UI 710 may include an image, an icon, and the like indicating that connection with a controller or an external apparatus is being attempted.

The UI 720 may include a list of external apparatuses currently connectable to the electronic apparatus 100 and a button for receiving a command to start connection with an external apparatus.

Both the terminal apparatus 200 and the operation pad 300 may be included in the list of external apparatuses. When both the terminal apparatus 200 and the operation pad 300 are included in the list of connectable external apparatuses, the electronic apparatus 100 may preferentially display the operation pad 300. For example, the method of preferentially displaying a device may include displaying a device having priority in an uppermost region of an external apparatus list, or displaying the device having priority in a highlighted manner using a preset color.

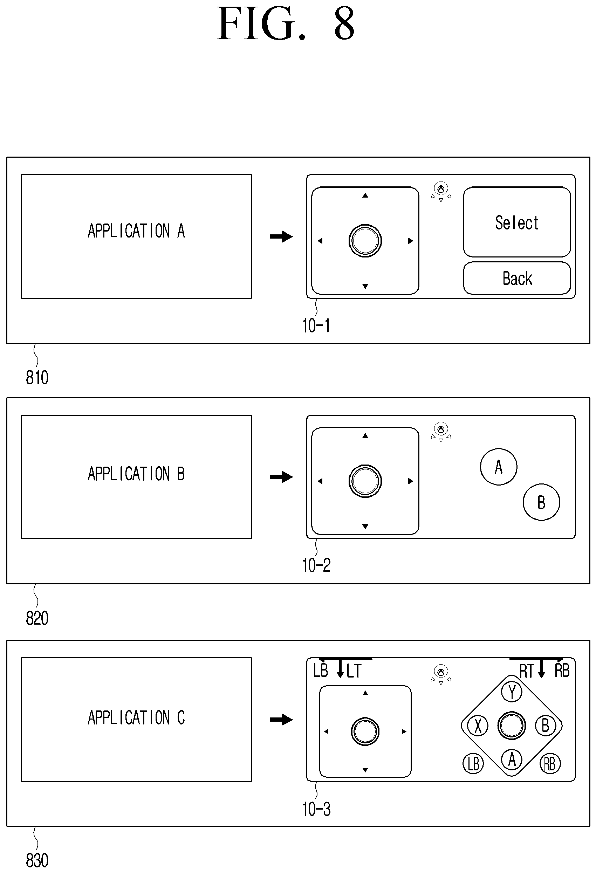

FIG. 8 is a view provided to explain an operation UI corresponding to an application according to an embodiment.

Referring to FIG. 8, the terminal apparatus 200 may display an operation UI 10 corresponding to an application. A different control UI may exist for each application. When application providers that develop applications are different, control UIs of an operation pad may differ. Even when the application provider is the same, the control UIs of the operation pad may differ depending on the applications provided.

The electronic apparatus 100 may obtain an operation UI corresponding to a specific application. Since operation UIs corresponding to respective applications are different, the operation UI displayed according to the application may be different.

According to embodiment 810 of FIG. 8, the terminal apparatus 200 may display an operation UI 10-1 corresponding to application A.

According to embodiment 820 of FIG. 8, the terminal apparatus 200 may display an operation UI 10-2 corresponding to application B.

According to embodiment 830 of FIG. 8, the terminal apparatus 200 may display an operation UI 10-3 corresponding to application C.

At least one of a shape, position, area, size, color, or transparency of elements included in the operation UI 10 corresponding to each application may be different.

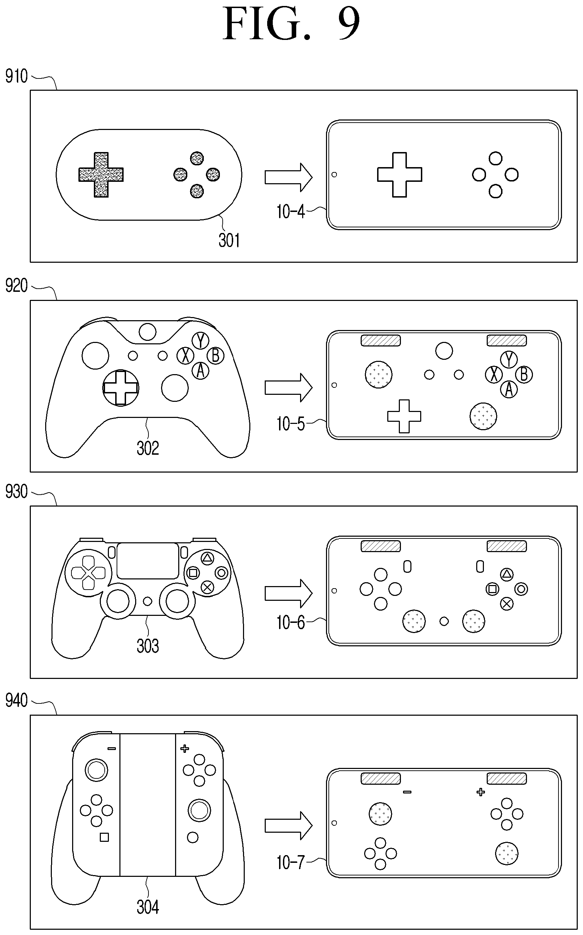

FIG. 9 is a view provided to explain an operation UI according to an operation pad according to an embodiment.

Referring to FIG. 9, the terminal apparatus 200 may display an operation UI 10 corresponding to an operation pad. FIG. 8 describes that the control UI differs according to the application. According to another implementation example, different control UIs may exist according to the operation pad. When operation pads are different, control UIs may also be different.

The electronic apparatus 100 may obtain first operation UI information corresponding to a specific operation pad. The electronic apparatus 100 may obtain second operation UI information by modifying the first operation UI information based on size information of the terminal apparatus 200. The electronic apparatus 100 may display a second UI based on the second operation UI information. Since first operation UI information corresponding to each application is different, the operation UI 10 displayed may differ depending on the application.

According to embodiment 910 of FIG. 9, the terminal apparatus 200 may display an operation UI 10-4 corresponding to operation pad 301.

According to embodiment 920 of FIG. 9, the terminal apparatus 200 may display an operation UI 10-5 corresponding to operation pad 302.

According to embodiment 930 of FIG. 9, the terminal apparatus 200 may display an operation UI 10-6 corresponding to operation pad 303.

According to embodiment 940 of FIG. 9, the terminal apparatus 200 may display an operation UI 10-7 corresponding to operation pad 304.

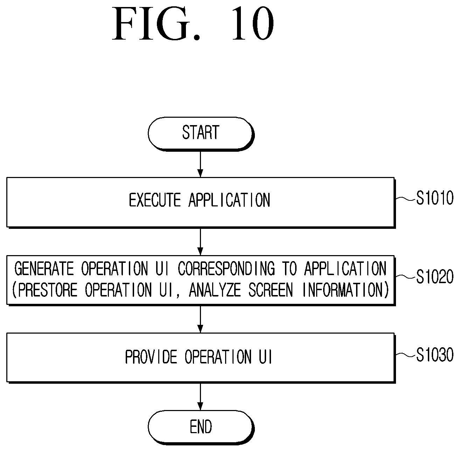

FIG. 10 is a view provided to explain an operation of providing an operation UI according to an embodiment.

Referring to FIG. 10, the electronic apparatus 100 may execute an application (S1010). The electronic apparatus 100 may receive a user input for selecting a specific application.

The electronic apparatus 100 may generate an operation UI corresponding to the application (S1020). The operation UI may be a UI for controlling the application executed in the electronic apparatus 100. The operation UI may represent a virtual operation pad screen provided to an external apparatus (or a terminal apparatus) connected to the electronic apparatus 100.

The electronic apparatus 100 may provide the operation UI (S1030). The electronic apparatus 100 may provide the operation UI to the terminal apparatus 200 connected to the electronic apparatus 100. The terminal apparatus 200 may display the received operation UI. The terminal apparatus 200 may receive a user key input through the operation UI. When a user key input is received through the operation UI, the electronic apparatus 100 may change a screen provided by the application through a user key input.

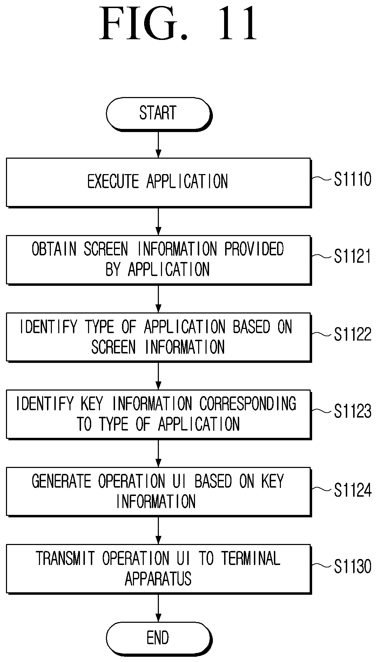

FIG. 11 is a view provided to explain an operation of identifying key information according to an embodiment.

Operations S1110 and S1130 of FIG. 11 may correspond to operations S1010 and S1030 of FIG. 10. A repeated description is omitted.

The electronic apparatus 100 may obtain screen information provided by an application (S1121). The screen information may include various types of information related to a screen displayed according to execution of the application. For example, the screen information may include identification information of an application providing the screen, image frames constituting the screen, timing control information of the image frames, and the like.

The electronic apparatus 100 may identify a type of the application based on the screen information (S1122).

The type of the application may represent a preset classification criterion. For example, the application type may include a content viewing service type, a game service type, an education service type, a chatting service type, or the like. The preset classification criterion may be changed according to a user setting.

In one example, the electronic apparatus 100 may identify the type of the application using identification information of the application.

In one example, the electronic apparatus 100 may identify the type of the application by analyzing image frames. An artificial intelligence model may be used to analyze the image frames. The artificial intelligence model may be a model that analyzes images and outputs a probability value for the type of the application. An automatic contents recognition (ACR) function may be used to analyze the images.

The electronic apparatus 100 may identify key information corresponding to the type of the application (S1123).

The key information may be information used to generate the operation UI. The key information may include various types of information related to keys included in the operation UI. The key information may include at least one of a key structure, a key shape, a key size, a key position, a key recognition method, or a key mapping value.

The key structure may represent a configuration form constituting keys. The key structure may indicate whether a key for performing a specific function is included and/or the number of keys.

In one example, a first key structure may represent a structure including a navigation key, a first function key (selection), and a second function key (cancellation). The first key structure may include a navigation key, a first function key for selection, and a second function key for cancellation. The navigation key may be composed of at least one sub-key (detail key). For example, the navigation key may include at least one of an up key, a down key, a left key, a right key, or a joystick key.

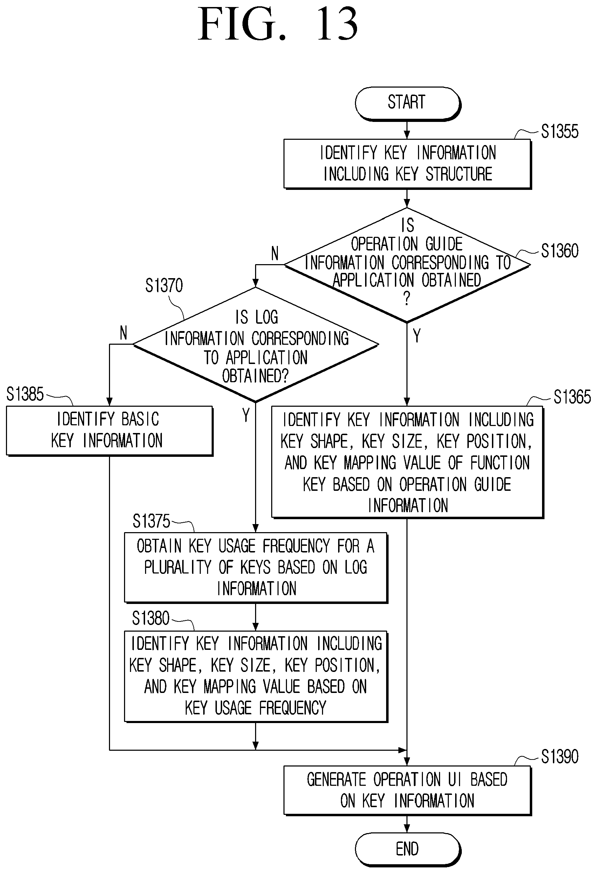

In one example, a second key structure may represent a structure including a navigation key and a function key (undetermined). The function of the function key may be determined later based on operation guide information or log information. A related description will be described with reference to FIG. 13.

The key shape may represent an external form of a key.

The key size may represent a physical value of a UI representing the key.

The key position may represent coordinates at which the key is displayed.

The key recognition method may represent a touch method by which the key is recognized. For example, the key recognition method may include a touch method or a swipe method. The swipe method may be described as a drag method.

The key mapping value may represent a command executed corresponding to the key. For example, the key mapping value may indicate which command is executed when a specific key is pressed.

FIG. 12 is a view provided to explain an operation of identifying a key structure of key information according to an embodiment.

Referring to FIG. 12, after obtaining screen information, the electronic apparatus 100 may obtain an image frame included in the screen information (S1205).

The electronic apparatus 100 may identify at least one object included in the image frame (S1210).

The electronic apparatus 100 may determine whether a selectable object is identified (S1215).

The selectable object may represent an object selectable by a user among a plurality of objects existing in the image frame. A user setting for the selectable object may be predetermined. For example, the selectable object may represent a menu object, an item object, or the like.

The selectable object may represent a preset-shaped object having an area equal to or greater than a threshold area. For example, the selectable object may be determined as a rectangular object having a horizontal length of 10 pixels or more and a vertical length of 10 pixels or more. Detailed numerical values such as the horizontal length, the vertical length, and the rectangular shape may be changed according to a user setting.

Operation S1215 may be replaced with an operation of identifying whether selectable objects are identified in a number equal to or greater than a threshold number. One selectable object may also exist in a game service type. When selectable objects are identified in a number equal to or greater than a threshold number, the electronic apparatus 100 may identify the application as a first application type (a content viewing service type).

When a selectable object is identified in the image frame (S1215-Y), the electronic apparatus 100 may identify an application providing the screen information as a first application type (S1220). The first application type may be a content viewing service type.

When the first application type is identified, the electronic apparatus 100 may identify a first key structure (S1225). The first key structure may represent a structure including a navigation key and a function key (a selection key and a cancellation key). The function key included in the first key structure may include a key performing a selection function and a cancellation function. The navigation key and the function key may represent plural concepts.

When a selectable object is not identified in the image frame (S1215-N), the electronic apparatus 100 may determine whether a movable object is identified in the image frame (S1230).

The movable object may represent at least one object having a movable attribute among a plurality of objects identified in the image frame. The movable object may be an object having movement in a game. The movable object may be an object for which a user setting is predetermined. For example, the movable object may be an animal object, a person object, a ball object, a vehicle object, or the like.

When a movable object is identified in the image frame (S1230-Y), the electronic apparatus 100 may identify an application providing the screen information as a second application type (S1235). The second application type may represent a game service type.

When the application is identified as the second application type, the electronic apparatus 100 may identify a second key structure (S1240). The second key structure may represent a structure including a navigation key and a function key (an undetermined function key). Any function key included in the second key structure may be a key for which a function is not determined. The navigation key and the function key may represent plural concepts.

When a movable object is not identified in the image frame (S1230-N), the electronic apparatus 100 may identify the application as a third application type (S1245). The third application type may be a default type. The default type may be a type predetermined according to a user setting. The default type may be a type that is determined by default when the type of an application is not clearly identified.

When the default type is identified, the electronic apparatus 100 may identify a third key structure (S1250). The third key structure may represent a structure including a navigation key and a function key (a selection key). The function key included in the third key structure may be a key performing selection.

When the key structure is identified, the electronic apparatus 100 may identify (or obtain) key information including the key structure (S1255). The electronic apparatus 100 may obtain information for representing a key other than the key structure (a key shape, a key size, a key position, a key recognition method, or a key mapping value). A related description will be described with reference to FIG. 13.

According to various embodiments, when the first key structure or the third key structure is identified, the electronic apparatus 100 may generate an operation UI based on the first key structure or the third key structure. This is because a mapping operation (selection, cancellation, etc.) corresponding to a function key is clearly determined. However, when the second key structure is identified, since a mapping operation corresponding to a function key is not determined, an additional operation may be required in order to generate an operation UI.

FIG. 13 is a view provided to explain an operation of identifying key information according to an embodiment.

Operation S1355 of FIG. 13 may correspond to operation S1255 of FIG. 12. A repeated description is omitted.

The electronic apparatus 100 may identify key information including a key structure. The electronic apparatus 100 may require additional information for representing a key in addition to the key structure.

The electronic apparatus 100 may identify whether operation guide information corresponding to an application is obtained (S1360). The operation guide information may be information representing an operation UI used to perform the application. The operation guide information may include key information used to control the application. An example related to the operation guide information will be described with reference to FIG. 15.

In one example, the operation guide information may be directly provided by the application.

In one example, the operation guide information may be stored in advance in the electronic apparatus 100. The electronic apparatus 100 may obtain operation guide information corresponding to the application among a plurality of operation guide information stored in advance.

In one example, the operation guide information may be received through an external server. The electronic apparatus 100 may request operation guide information corresponding to the application from an external server, and may receive the operation guide information from the external server.

When it is identified that the operation guide information has been obtained (S1360-Y), the electronic apparatus 100 may identify key information including at least one of a key shape, a key size, a key position, a key recognition method, or a key mapping value based on the operation guide information (S1365).

When operation guide information corresponding to the application is not obtained (S1360-N), the electronic apparatus 100 may identify whether log information corresponding to the application is obtained (S1370).

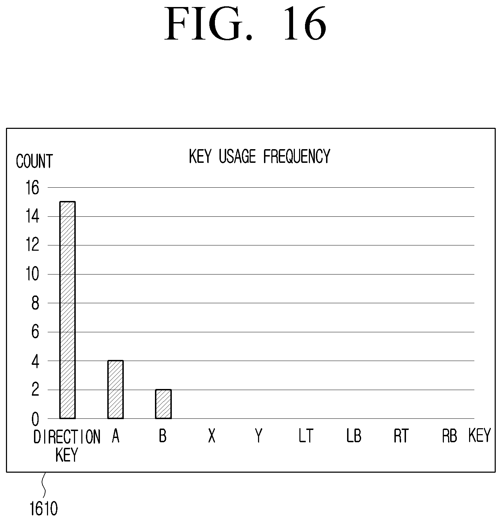

When log information corresponding to the application is obtained (S1370-Y), the electronic apparatus 100 may obtain key usage frequency for a plurality of keys based on the log information (S1375). The key usage frequency may be information indicating which keys a user actually used while the application is performed. A related description will be described with reference to FIG. 16.

The electronic apparatus 100 may identify key information including at least one of a key shape, a key size, a key position, a key recognition method, or a key mapping value based on the key usage frequency (S1380).

In one example, the electronic apparatus 100 may identify a function key having a key usage frequency equal to or greater than a threshold ratio as a first shape.

In one example, the electronic apparatus 100 may identify a function key having a key usage frequency equal to or greater than a threshold ratio as a first size. The electronic apparatus 100 may obtain key information in which a key size increases as a usage frequency increases.

In one example, the electronic apparatus 100 may identify a function key having a key usage frequency equal to or greater than a threshold ratio as a first position. The electronic apparatus 100 may arrange a key having the highest usage frequency in a preset area of the operation UI that is easy for a user to touch (e.g., a lower-direction area). The electronic apparatus 100 may determine an arrangement order of keys according to an order of the usage frequencies.

When log information corresponding to the application is not obtained (S1370-N), the electronic apparatus 100 may identify basic key information (S1385). The basic key information may be key information determined regardless of operation guide information, log information, or the like. The basic key information may include at least one of a key shape, a key size, a key position, a key recognition method, or a key mapping value that users frequently use.

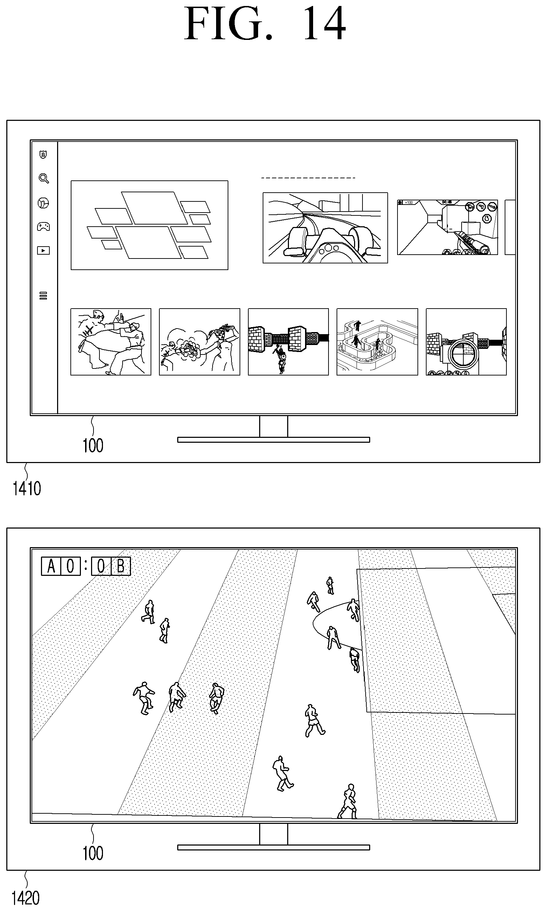

FIG. 14 is a view provided to explain an application type according to an embodiment.

Referring to FIG. 14, the electronic apparatus 100 may determine an application type by analyzing an image frame provided by an application. The electronic apparatus 100 may display an image frame constituting a screen related to the application. The electronic apparatus 100 may analyze the displayed image frame to determine whether the currently displayed image frame (screen) is provided by an application of a particular type. The electronic apparatus 100 may determine the application type based on at least one of a structure of a user interface (UI) or a pattern of the UI in the image frame.

The structure of the UI may represent an arrangement structure, an arrangement position, or the like of UIs included in the image frame.

The pattern of the UI may represent repeated positions of UIs included in the image frame, repeated shapes of UI, or the like.

Various methods for analyzing an image frame may exist.

In one example, the electronic apparatus 100 may determine an application type by analyzing one image frame provided by one application. The electronic apparatus 100 may determine a type of a specific application by analyzing one screen (image frame) related to the specific application. A screen to be analyzed may be an initial screen or a screen at a preset time point. The preset time point may be changed according to a user command or a user setting.

In one example, the electronic apparatus 100 may determine an application type by analyzing a plurality of image frames provided by one application. The electronic apparatus 100 may receive a plurality of image frames provided by a specific application over time. The electronic apparatus 100 may determine a type of the specific application by analyzing a plurality of screens (image frames) provided at different times.

In one example, the electronic apparatus 100 may determine an application type by analyzing at least one image frame provided by a plurality of applications. The electronic apparatus 100 may analyze at least one screen (image frame) displayed on the display 140 or the like. The screens displayed on the display 140 may be screens provided through a plurality of applications. The electronic apparatus 100 may determine a type of an application that provided a lastly displayed image frame by analyzing image frames provided by each of a plurality of applications. A user may execute various applications according to a predetermined routine. The electronic apparatus 100 may determine the type of the application that provides a final screen by comprehensively considering screens provided by the plurality of applications.

For example, it is assumed that a first application provides a first image frame and, after the first image frame is provided, a second application provides a second image frame. The electronic apparatus 100 may determine a type of the second application by analyzing both the first image frame and the second image frame.

Embodiment 1410 of FIG. 14 indicates that an application of a content viewing service type is provided in the electronic apparatus 100. The electronic apparatus 100 may display a screen of embodiment 1410 by executing the application of the content viewing service type. The electronic apparatus 100 may identify that the application is the content viewing service type using screen information of embodiment 1410. The electronic apparatus 100 may determine that the application is the content viewing service type by identifying a selectable object (an item object) in an image frame provided by the application.

A screen provided by an application of the content viewing service type may vary according to the application.

In one example, a screen provided by an application of the content viewing service type may include a UI corresponding to content (for example, a thumbnail screen).

In one example, a screen provided by an application of the content viewing service type may include a UI corresponding to content (for example, a thumbnail) and a UI indicating a specific function (for example, an external apparatus connection function or an external application connection function).

The content viewing service type may represent an application type providing a service for a user to view multimedia content such as a video. The content viewing service type may be described as a media viewing service type, a content streaming service type, an online content service type, a multimedia service type, a digital video streaming service type, a video viewing service type, or the like.

Embodiment 1420 of FIG. 14 indicates that an application of a game service type is provided in the electronic apparatus 100. The electronic apparatus 100 may display a screen of embodiment 1420 by executing the application of the game service type. The electronic apparatus 100 may identify that the application is the game service type using screen information of embodiment 1420. The electronic apparatus 100 may determine that the application is the game service type by identifying a movable object (a person, a vehicle, or the like) in an image frame provided by the application.

In one example, when objects moving in real time are identified in a number equal to or greater than a threshold number in an image frame, the electronic apparatus 100 may determine the type of the application as the game service type.

In one example, when preset objects (a car, an airplane, a gun, a person, a virtual character) are identified in a number equal to or greater than a threshold number (or less than a threshold number), the electronic apparatus 100 may determine the type of the application as the game service type. Since there is a possibility that preset objects are also identified in the content viewing service type, the electronic apparatus 100 may additionally check the structure of the UI or the pattern of the UI in addition to the preset objects. When arrangement positions of the preset objects do not have a certain pattern, the electronic apparatus 100 may determine the application type as the game service type.

In one example, when a position of a preset object changes by analyzing a plurality of image frames received through a specific application, the electronic apparatus 100 may determine the application type as the game service type.

The game service type may represent an application providing a game service to a user. The game service type may be described as an online game service type, a cloud game service type, a digital game service type, a game streaming service type, a mobile game service type, a virtual reality service type, an augmented reality service type, or the like.

FIG. 15 is a view provided to explain a frequency of key usage based on operation guide information according to an embodiment.

Embodiment 1510 of FIG. 15 may represent operation guide information. The operation guide information may include key information of an operation pad for controlling a specific application. The operation guide information may include various information related to the operation pad. The operation guide information may include at least one of a key structure, a key shape, a key size, a key position, a key recognition method, or a key mapping value of the operation pad.

FIG. 16 is a view provided to explain log information according to an embodiment.

Embodiment 1610 of FIG. 16 may represent log information. The log information may include various information related to executing or using an application. The log information may include at least one of an execution time, an execution command, execution content, an input key type, a number of key inputs, or a key input time.

The electronic apparatus 100 may identify an operation pad corresponding to the application, and obtain log information of the operation pad. In one example, the log information of the operation pad may include only a key type and the number of key inputs.

The electronic apparatus 100 may obtain the key type and the number of key inputs using the log information. The electronic apparatus 100 may obtain usage frequency (or usage frequency information) based on the types of keys input by a user and the number of inputs thereof.

Referring to embodiment 1610, the key most frequently used by a user during a preset time period may be a direction key (navigation key). The second most frequently used key may be key A. The third most frequently used key may be key B.

The electronic apparatus 100 may generate an operation UI using key usage frequency. The electronic apparatus 100 may generate an operation UI including only a direction key, key A, and key B having usage frequency equal to or greater than a threshold value. The electronic apparatus 100 may generate an operation UI such that, among function keys (key A and key B) excluding the direction key, key A having higher usage frequency is arranged lower than key B.

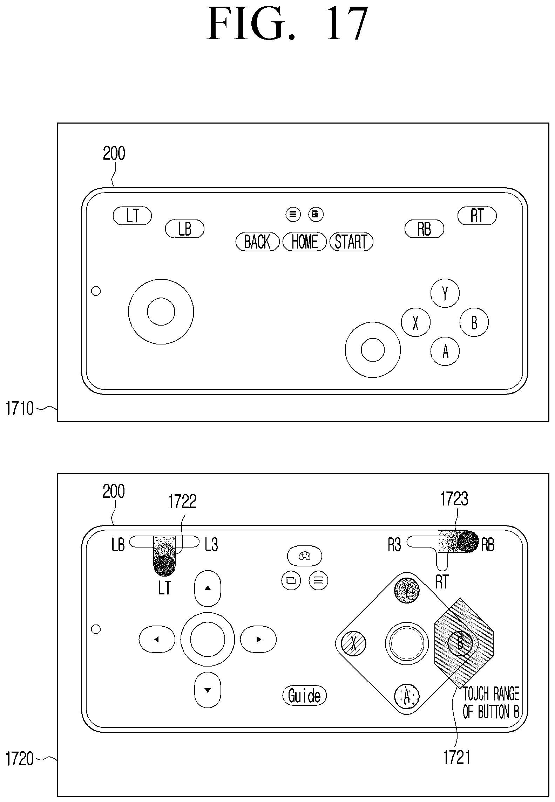

FIG. 17 is a view provided to explain a touch setting of an operation UI according to an embodiment.

Embodiment 1710 of FIG. 17 may represent an operation UI before being modified in a preset manner.

Embodiment 1720 of FIG. 17 may represent an operation UI modified in a preset manner. The electronic apparatus 100 may change a touch recognition method of a preset key or a key located in a preset area.

In one example, the electronic apparatus 100 may change a key recognition method of preset keys (LR, LB, L3, R3, RT, RB) from a touch method to a swipe method.

In one example, the electronic apparatus 100 may change a key recognition method of keys (LR, LB, L3, R3, RT, RB) located in a preset region from a touch method to a swipe method. Keys 1721 and 1723 may indicate that the keys are recognized in a swipe manner.

The electronic apparatus 100 may obtain keys having usage frequency equal to or greater than a threshold ratio. The electronic apparatus 100 may change a touch recognition range of a key having usage frequency equal to or greater than the threshold ratio. In order for a frequently used key to be more easily recognized, the electronic apparatus 100 may change a touch recognition range of a first size into a second size larger than the first size. The range 1721 represents a touch recognition range changed to the second size.

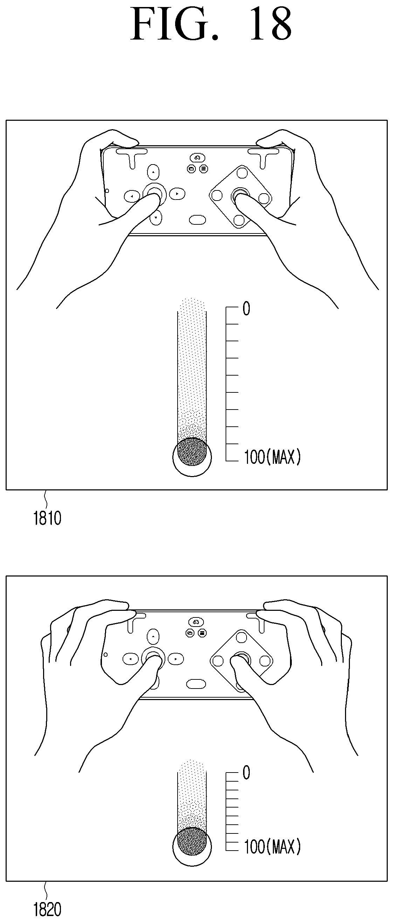

FIG. 18 is a view provided to explain an operation of changing touch sensitivity according to an embodiment.

Referring to embodiment 1810 of FIG. 18, the electronic apparatus 100 may change a key recognition method using user log information. The electronic apparatus 100 may obtain log information including a user key type and a key input position during a threshold time. The key input position may represent a touch range input by a user in order to press a specific key.

The electronic apparatus 100 may analyze the log information and provide a key recognition method suitable for the user.

For example, the electronic apparatus 100 may set touch sensitivity (included in the key recognition method) for a navigation key to a first range. The first range may represent a range (or distance) that a user should touch (or swipe) for the navigation key to be recognized. The electronic apparatus 100 may determine, by analyzing the log information, that a user's touch range is smaller than a threshold range (or threshold distance). The electronic apparatus 100 may change the touch sensitivity to a second range smaller than the first range. The electronic apparatus 100 may generate an operation UI based on the changed touch sensitivity.

Embodiment 1820 may represent an operation UI to which the changed touch sensitivity is applied. The electronic apparatus 100 may change the touch sensitivity such that the touch sensitivity is higher than before. Higher touch sensitivity may mean that a key is recognized even when a key is moved by a smaller range (a smaller distance).

A case opposite to embodiment of FIG. 18 may be applied. The electronic apparatus 100 may change the key recognition method such that touch sensitivity is lower than before.

FIG. 19 is a view provided to explain an operation of changing an operation UI according to a tilt of the terminal apparatus 200 according to an embodiment.

Embodiment 1910 of FIG. 19 may represent axes with respect to the terminal apparatus 200. It is assumed that the terminal apparatus 200 is placed in a space including an x-axis, a y-axis, and a z-axis. A front surface of the terminal apparatus 200 may be a direction to which an arrow is directed.

Rotation about the x-axis may be in a roll direction. Rotation about the y-axis may be in a pitch direction. Rotation about the z-axis may be in a yaw direction.

The x-axis, the y-axis, and the z-axis may be described as a first axis, a second axis, and a third axis.

The roll direction, the pitch direction, and the yaw direction may be described as a first direction, a second direction, and a third direction. A direction may be described as a rotation direction.

Embodiment 1920 of FIG. 19 may represent a situation in which the terminal apparatus 200 rotates in the pitch direction. When a user holds the terminal apparatus 200, the terminal apparatus 200 may be upright in a direction facing the x-axis. However, when a user places the terminal apparatus 200 on a floor, the terminal apparatus 200 may lie in a direction facing the z-axis. It is assumed that the terminal apparatus 200 rotates in the pitch direction (or an opposite direction of the pitch direction).

Embodiment 1930 of FIG. 19 may represent that an operation UI is changed according to tilt information of the terminal apparatus 200. The terminal apparatus 200 may obtain tilt information of the terminal apparatus 200 through a gyroscope sensor. A key position may be changed according to a degree of rotation in the pitch direction.

As the terminal apparatus 200 moves in the pitch direction (or an opposite direction of the pitch direction), a distance between preset keys (for example, navigation keys and stick keys) included in the operation UI may be changed.

In a situation in which the terminal apparatus 200 faces the x-axis, a distance between a first key (an L stick key) and a second key (an R stick key) may be a first distance d1.

In a situation in which the terminal apparatus 200 faces the z-axis, a distance between the first key (the L stick key) and the second key (the R stick key) may be a second distance d2 smaller than the first distance d1.

When the terminal apparatus 200 rotates based on the pitch direction, a distance between preset keys included in the operation UI may be changed.

A subject of an operation of changing the operation UI may be various.

In one example, an operation of changing the operation UI according to tilt information of the terminal apparatus 200 may be performed by the terminal apparatus 200 itself.

In one example, an operation of changing the operation UI according to tilt information of the terminal apparatus 200 may be performed by the electronic apparatus 100. The terminal apparatus 200 may transmit the tilt information to the electronic apparatus 100. The electronic apparatus 100 may receive the tilt information from the terminal apparatus 200. The electronic apparatus 100 may change the operation UI based on the received tilt information.

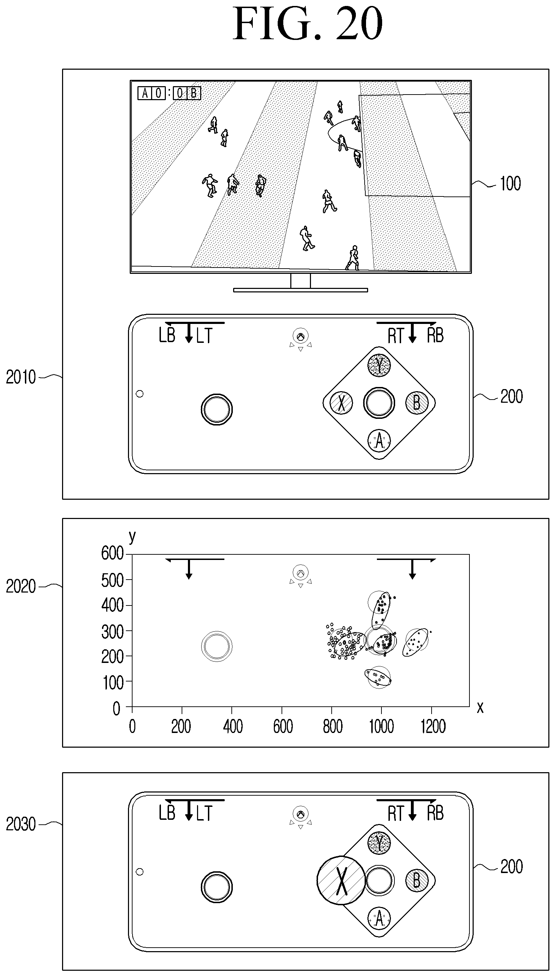

FIG. 20 is a view provided to explain an operation of changing an operation UI using log information according to an embodiment.

Embodiment 2010 of FIG. 20 represents that the electronic apparatus 100 displays image frames provided by an application. The terminal apparatus 200 may be connected to the electronic apparatus 100. The terminal apparatus 200 may display an operation UI provided by the electronic apparatus 100. A user of the terminal apparatus 200 may input a key through the operation UI. A user key input that is input on the terminal apparatus 200 may be transmitted to the electronic apparatus 100. The electronic apparatus 100 may display an image frame corresponding to the user key input.

The electronic apparatus 100 may collect user key inputs for a threshold time. The electronic apparatus 100 may obtain log information obtained by collecting information on user key inputs for the threshold time.

The log information may include a key type, a key input position, or the like.

Embodiment 2020 of FIG. 20 may represent log information. The log information may indicate how many times a specific key is input and at which position the key is input.

Embodiment 2030 of FIG. 20 may represent an operation UI changed using the log information. Based on the log information, a key most frequently touched may be an X key. The electronic apparatus 100 may change a recognition method (a key recognition range) or a key size using the number of key inputs and the key input position.

In one example, an operation UI may be changed such that a key that is input more frequently is more easily recognized.

In one example, a recognition position of an existing key may be changed based on a key input position.

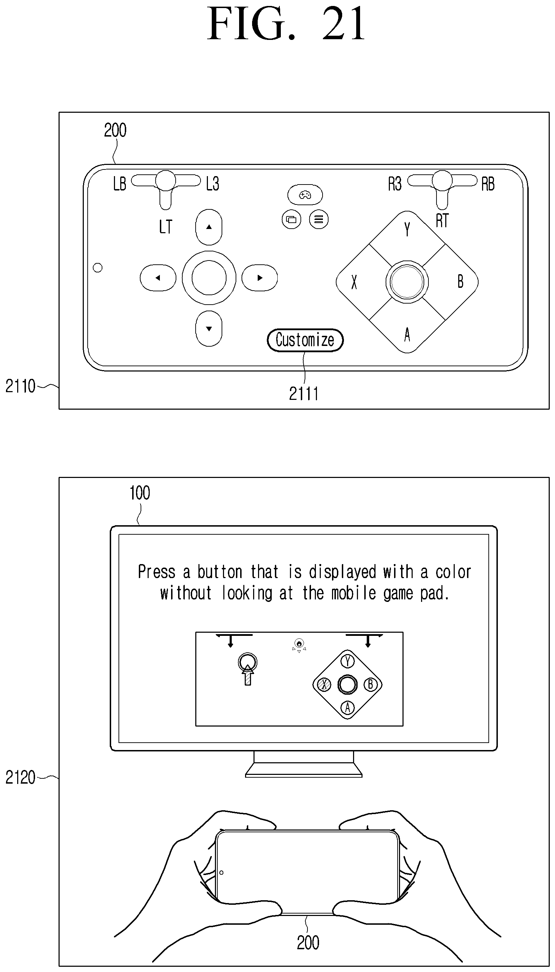

FIG. 21 is a view provided to explain a guide screen for changing an operation UI according to an embodiment.

Embodiment 2110 of FIG. 21 may represent a key 2111 for setting an operation UI. When a specific key 2111 is input by a user, detailed settings of the operation UI may be determined (or changed).

Embodiment 2120 of FIG. 21 represents an operation for setting an operation UI. When the key 2111 is input, the electronic apparatus 100 may provide a guide screen for setting the operation UI.

The guide screen may include image information or text information for guiding a user operation of the operation UI. Guide audio information may be output through the electronic apparatus 100 together with the guide screen.

In order to emphasize a guide operation, the electronic apparatus 100 may change a color of a key that the user should touch to be different from other keys. In order to emphasize the guide operation, the electronic apparatus 100 may display a preset indicator within a threshold distance from a key that the user should touch.

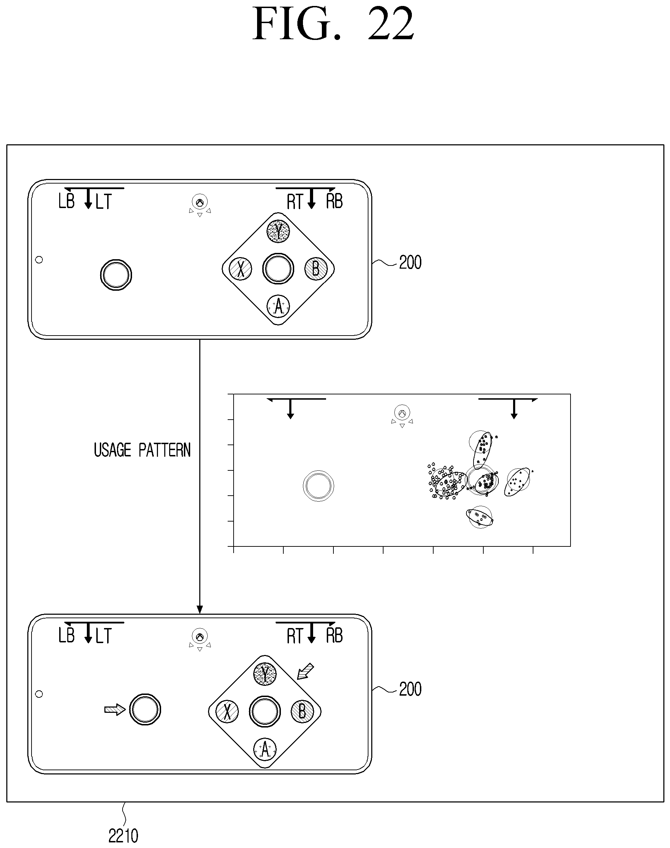

FIG. 22 is a view provided to explain an operation of changing an operation UI using log information according to an embodiment.

Embodiment 2210 of FIG. 22 may represent changing a position of a key using log information.

As in embodiment 2020 of FIG. 20, the electronic apparatus 100 may collect log information. The electronic apparatus 100 may analyze a usage pattern related to the operation UI of the user through the log information.

The usage pattern may represent a specific pattern related to key inputs included in the operation UI. The electronic apparatus 100 may identify, through an analysis result of operation logs, a pattern in which a user inputs a key closer to a center point of the operation UI than an existing key position.

The electronic apparatus 100 may generate an operation UI in which a key position is arranged closer to the center point of the operation UI based on the analysis result (usage pattern) of the operation logs. The electronic apparatus 100 may provide the newly generated operation UI.

According to various embodiments, a changing operation may be directly performed by the terminal apparatus 200 instead of the electronic apparatus 100.

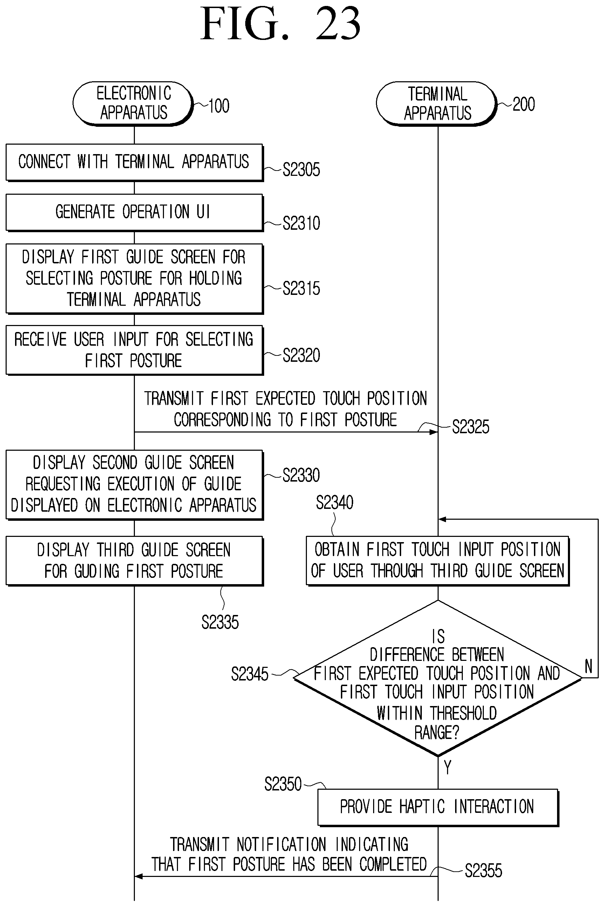

FIG. 23 is a view provided to explain an operation of displaying a guide screen related to an operation UI according to an embodiment.

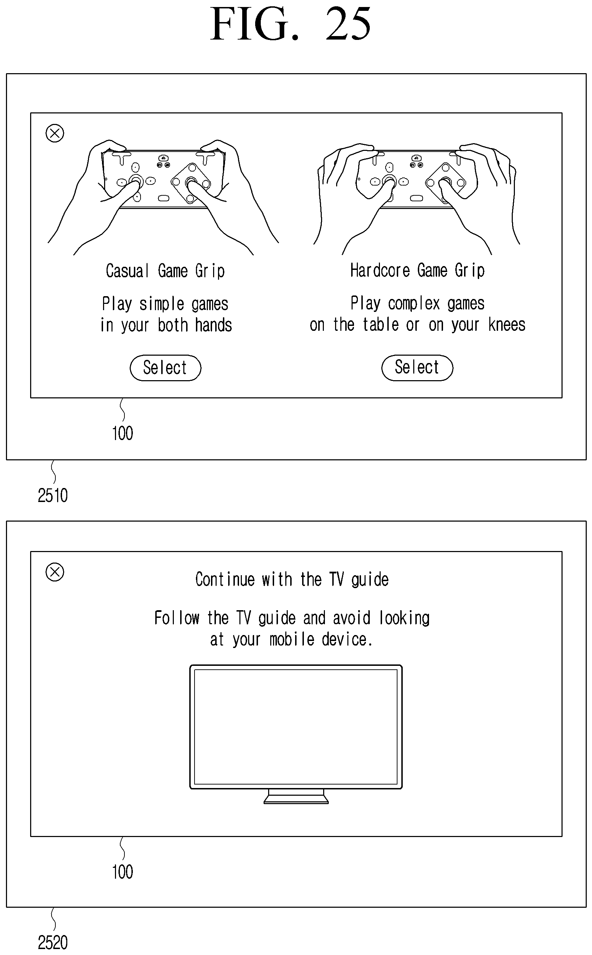

Referring to FIG. 23, the electronic apparatus 100 may be connected to the terminal apparatus 200 (S2305). The electronic apparatus 100 may generate an operation UI to be provided to the terminal apparatus 200 (S2310). The electronic apparatus 100 may display a first guide screen for selecting a posture for holding the terminal apparatus 200 (S2315). The electronic apparatus 100 may display a guide screen for selecting one posture among a plurality of postures. A description related to the first guide screen is provided in embodiment 2510 of FIG. 25.

The electronic apparatus 100 may receive a user input for selecting a first posture (S2320). The electronic apparatus 100 may identify that the first posture is selected based on the user input that is input through the first guide screen.

When the first posture is selected, the electronic apparatus 100 may transmit, to the terminal apparatus 200, a first expected touch position corresponding to the first posture (S2325). The electronic apparatus 100 may store, in advance, the first expected touch position corresponding to the first posture.

The electronic apparatus 100 may display a second guide screen requesting that a guide displayed on the electronic apparatus 100 be performed (S2330). A description related to the second guide screen is provided in embodiment 2520 of FIG. 25.

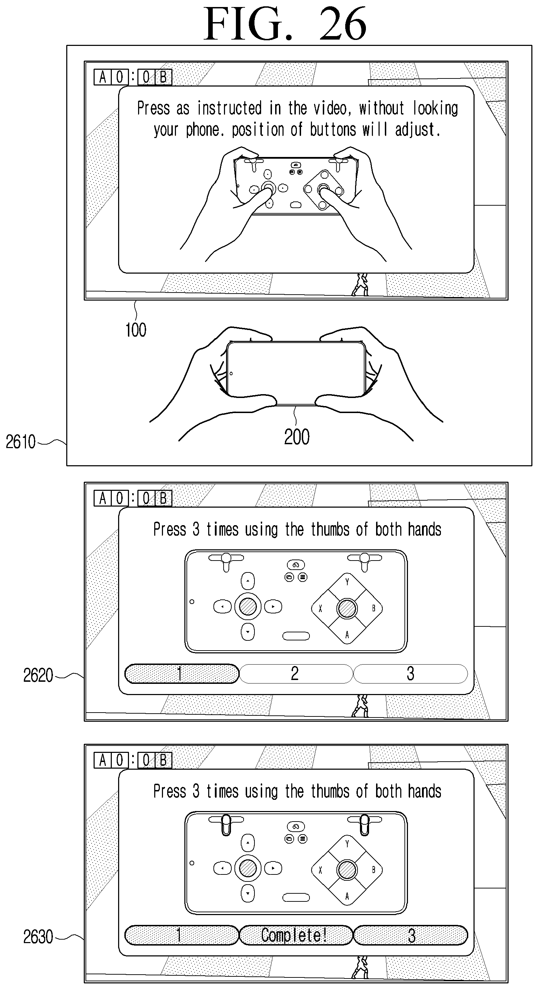

The electronic apparatus 100 may display a third guide screen for guiding the first posture (S2335). A description related to the third guide screen is provided in embodiment 2610 of FIG. 26.

A user may follow a specific guide operation while viewing the third guide screen displayed on the electronic apparatus 100. The third guide screen may include information indicating a guide operation to hold the terminal apparatus 200 in a specific posture. The third guide screen may include information guiding holding of the terminal apparatus 200 until a haptic interaction (for example, vibration) occurs.

After the third guide screen is displayed, the terminal apparatus 200 may obtain a first touch input position of the user through the third guide screen (S2340). The first touch input position may be described as a first key input position. The first touch input position does not indicate one specific position, and may include a plurality of positions touched by the user.

The terminal apparatus 200 may identify whether a difference between the first expected touch position and the first touch input position is within a threshold range (S2345). When the difference between the first expected touch position and the first touch input position is within the threshold range (S2345-Y), the terminal apparatus 200 may provide a haptic interaction (for example, vibration) (S2350). The terminal apparatus 200 may transmit, to the electronic apparatus 100, a notification indicating that the first posture has been completed (S2355).

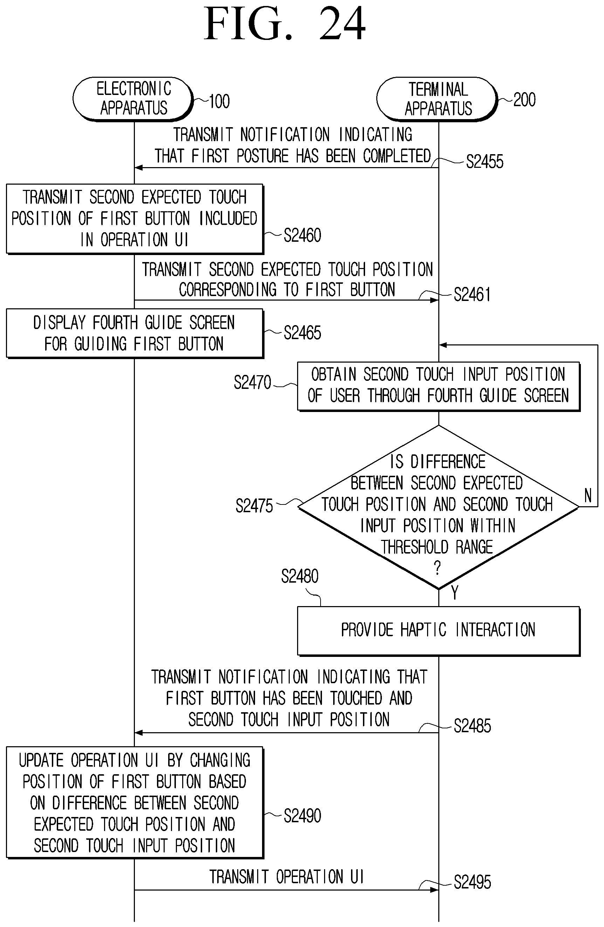

FIG. 24 is a view provided to explain an operation of displaying a guide screen related to an operation UI according to an embodiment.

Operation S2455 of FIG. 24 may correspond to operation S2355 of FIG. 23. A repeated description is omitted.

The electronic apparatus 100 may receive, from the terminal apparatus 200, a notification indicating that the first posture has been completed. The electronic apparatus 100 may obtain a second expected touch position of a first button included in the operation UI (S2460). The electronic apparatus 100 may transmit, to the terminal apparatus 200, the second expected touch position corresponding to the first button (S2461).

The electronic apparatus 100 may display a fourth guide screen for guiding the first button (S2465). The fourth guide screen may include information guiding touching of the first button. A description related to the fourth guide screen is provided with reference to screens 2620 and 2630 of FIG. 26.

After the fourth guide screen is displayed, the terminal apparatus 200 may obtain a second touch input position of the user through the fourth guide screen (S2470). The terminal apparatus 200 may identify whether a difference between the second expected touch position and the second touch input position is within a threshold range (S2475).

When the difference between the second expected touch position and the second touch input position is within the threshold range (S2475-Y), the terminal apparatus 200 may provide a haptic interaction (for example, vibration) (S2480). The terminal apparatus 200 may transmit at least one of a notification indicating that the first button has been touched or the second touch input position (S2485).

The electronic apparatus 100 may receive, from the terminal apparatus 200, at least one of the notification indicating that the first button has been touched or the second touch input position. The electronic apparatus 100 may determine whether to change a position of the first button based on a difference between the second expected touch position and the second touch input position. When the difference is within the threshold range, the electronic apparatus 100 may not change the operation UI.

When the difference is equal to or greater than the threshold range, the electronic apparatus 100 may update the operation UI by changing the position of the first button based on the difference between the second expected touch position and the second touch input position (S2490). The operation of updating the operation UI may be replaced with an operation of changing a key position. For example, the key position may be changed from the second expected touch position to the second touch input position.

The updating operation may include changing a key position. Since an operation UI is newly generated, the updating operation of the operation UI may be described as an operation of generating an operation UI.

The electronic apparatus 100 may transmit the operation UI to the terminal apparatus 200 (S2495). The terminal apparatus 200 may receive the operation UI from the electronic apparatus 100, and display the operation UI.

FIG. 25 is a view provided to explain an operation of displaying a guide screen related to an operation UI according to an embodiment.

Embodiment 2510 of FIG. 25 may represent a first guide screen displayed on the electronic apparatus 100. The first guide screen may be a screen for guiding a posture preferred by a user. The electronic apparatus 100 may display the first guide screen guiding selection of one posture among a plurality of postures.

Embodiment 2520 of FIG. 25 may represent a second guide screen displayed on the electronic apparatus 100. The second guide screen may include information requesting that a user take a specific action by following a guide displayed on the electronic apparatus 100.

FIG. 26 is a view provided to explain an operation of displaying a guide screen related to an operation UI according to an embodiment.

Embodiment 2610 of FIG. 26 may represent a third guide screen displayed on the electronic apparatus 100. The third guide screen may include guide information indicating that a specific posture should be taken. The guide information may include at least one of text information or image information indicating a guide posture. The electronic apparatus 100 may output audio information requesting that the specific posture be taken together with the third guide screen. A user may follow the third guide screen as it is. The fact that the user takes the specific posture may mean that the user touches a specific position (or a specific region). When an appropriate position corresponding to a guide operation is touched, the terminal apparatus 200 may output a haptic interaction (for example, vibration).

According to various embodiments, the first guide screen for a posture selection operation according to embodiment 2510 of FIG. 25 may not be displayed. The electronic apparatus 100 may display the third guide screen for one preset posture. Without separately selecting a posture, a user may be requested to take a specific posture according to the third guide screen displayed on the electronic apparatus 100.

Screen 2620 of FIG. 26 may be a fourth guide screen guiding clicking of a specific button. The fourth guide screen may include an indicator (outline highlighting, a specific region notification icon, etc.) for emphasizing a position of the specific button. The electronic apparatus 100 may display a region corresponding to the specific button in a preset color in order to emphasize the position of the specific button.

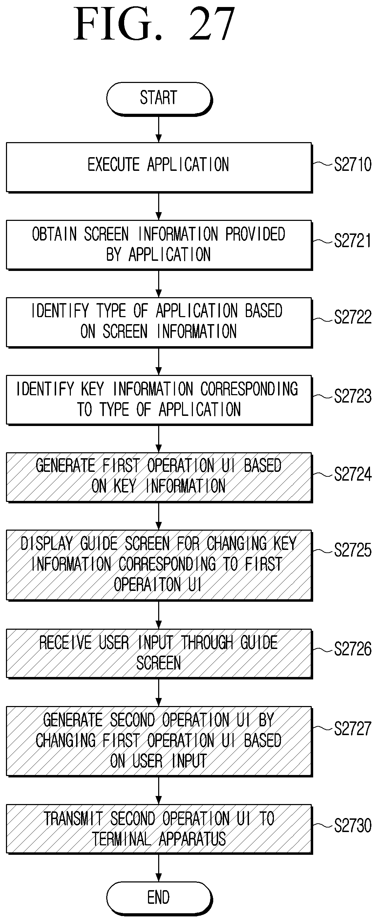

FIG. 27 is a view provided to explain an operation of changing an operation UI according to an embodiment.

Operations S2710, S2721, S2722, and S2723 of FIG. 27 may correspond to operations S1110, S1121, S1122, and S1123 of FIG. 11. A repeated description is omitted.

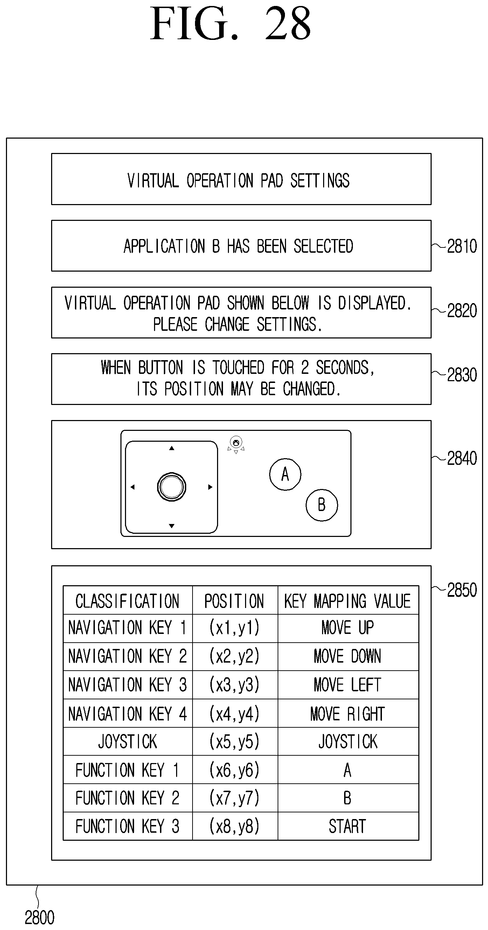

Referring to FIG. 27, after identifying key information, the electronic apparatus 100 may generate a first operation UI corresponding to the key information (S2724). The electronic apparatus 100 may display a guide screen for changing key information corresponding to the first operation UI (S2725). A description related to the guide screen is provided with reference to FIG. 28.

The electronic apparatus 100 may receive a user input through the guide screen (S2726).

In one example, the user input may be received through the electronic apparatus 100. The user input may be received through a remote control apparatus corresponding to the electronic apparatus 100.

In one example, a user input may be received through the terminal apparatus 200. The terminal apparatus 200 may receive a user key input and transmit the user key input to the electronic apparatus 100.

The electronic apparatus 100 may generate a second operation UI by changing the first operation UI based on the user input (S2727).

The changing operation may include an operation of changing at least one of a key structure, a key shape, a key size, a key position, a key recognition method, or a key mapping value.

The electronic apparatus 100 may transmit the second operation UI to the terminal apparatus 200. The terminal apparatus 200 may receive the second operation UI. The terminal apparatus 200 may display the second operation UI.

FIG. 28 is a view provided to explain an operation of changing an operation UI according to an embodiment.

Screen 2800 of FIG. 28 may be a guide screen for changing an operation UI. The guide screen 2800 may include information about an already determined operation UI (the first operation UI).

The guide screen 2800 may include at least one of a UI 2810 indicating a selected application, a UI 2820 indicating information for notifying that an operation UI is displayed and/or information for guiding change of settings, a UI 2830 guiding a method for changing a position, a UI 2840 indicating an image corresponding to the already determined first operation UI, or a UI 2850 indicating key information including a key position, a key mapping value, or the like for the already determined first operation UI.

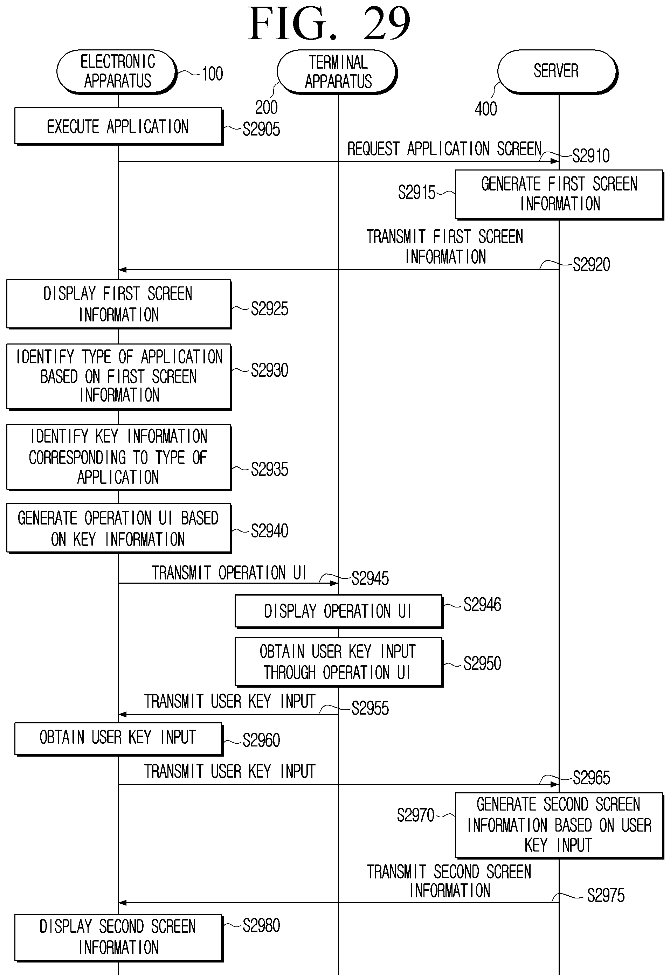

FIG. 29 is a view provided to explain an operation of receiving screen information through a server according to an embodiment.

Referring to FIG. 29, the electronic apparatus 100 may execute an application (S2905). The electronic apparatus 100 may request an application screen from a server 400 (S2910). The server 400 may generate first screen information in response to a request received from the electronic apparatus 100 (S2915). The server 400 may transmit the first screen information to the electronic apparatus 100 (S2920).

The electronic apparatus 100 may receive the first screen information from the server 400. The electronic apparatus 100 may display the first screen information (S2925).

The electronic apparatus 100 may identify an application type based on the first screen information (S2930). The electronic apparatus 100 may identify key information corresponding to the application (S2935). The electronic apparatus 100 may generate an operation UI based on the key information (S2940). The electronic apparatus 100 may transmit the operation UI to the terminal apparatus 200 (S2945).

The terminal apparatus 200 may receive the operation UI from the electronic apparatus 100. The terminal apparatus 200 may display the operation UI (S2946). The terminal apparatus 200 may obtain a user key input through the operation UI (S2950). The terminal apparatus 200 may transmit the user key input to the electronic apparatus 100 (S2955).

The electronic apparatus 100 may receive the user key input from the terminal apparatus 200. The electronic apparatus 100 may obtain the user key input (S2960). The electronic apparatus 100 may transmit the user key input to the server 400 (S2965).

The server 400 may receive the user key input from the electronic apparatus 100. The server 400 may generate second screen information based on the user key input (S2970). The server 400 may transmit the second screen information to the electronic apparatus 100 (S2975).

The electronic apparatus 100 may receive the second screen information from the server 400. The electronic apparatus 100 may display the second screen information (S2980).

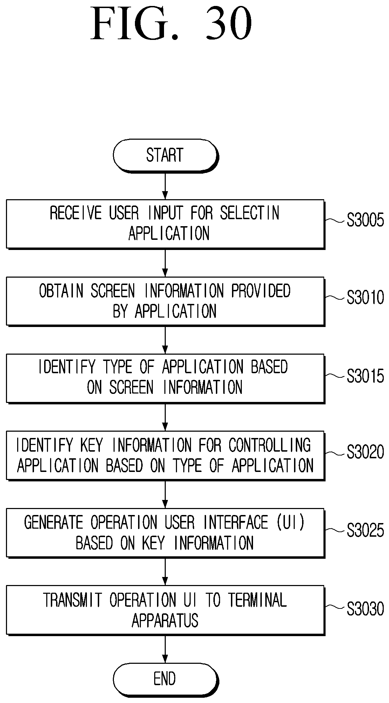

FIG. 30 is a view provided to explain a method of controlling the electronic apparatus 100 according to an embodiment.

Referring to FIG. 30, a control method of an electronic apparatus includes, when a user input for selecting an application is received (S3005), obtaining screen information provided by the application (S3010), identifying a type of the application based on the screen information provided by the application (S3015), identifying key information for controlling the application based on the type of the application (S3020), generating an operation UI (User Interface) based on the key information (S3025), and transmitting the operation UI to a terminal apparatus (S3030).

The operation of identifying the type of the application (S3015) may include obtaining an image frame included in the screen information, identifying at least one object included in the image frame, and determining the type of the application based on the at least one object, and the operation of identifying the key information (S3020) may include identifying key information including a key structure corresponding to the type of the application.

The operation of identifying the type of the application (S3015) may include identifying the type of the application as a first type when a selectable object among the at least one object is identified, and the operation of identifying the key information (S3020) may include obtaining key information including a first key structure corresponding to the first type.

The selectable object is a preset object representing an item selectable based on a user key input, the first type is a content viewing service type, and the first key structure may be a structure including a navigation key, a first function key for selection, and a second function key for cancellation.

The operation of identifying the type of the application (S3015) may include identifying the type of the application as a second type when a movable object among the at least one object is identified, and the operation of identifying the key information (S3020) may include obtaining key information including a second key structure corresponding to the second type.

The movable object is a preset object whose displayed position is changeable based on a user key input, the second type is a game service type, and the second key structure may be a structure including a navigation key and a plurality of function keys to which functions are not mapped.

The operation of identifying the key information (S3020) may include obtaining operation guide information corresponding to the application or log information corresponding to the application, and identifying key information including key mapping values of each of the plurality of function keys based on at least one of the operation guide information or the log information.

The operation of identifying the key information (S3020) may include obtaining operation guide information corresponding to the application, and identifying key information including at least one of a key shape, a key size, a key position, a key recognition method, or a key mapping value based on the operation guide information.

The operation of identifying the key information (S3020) may include obtaining log information corresponding to the application, obtaining key usage frequency based on the log information, and identifying key information including at least one of a key shape, a key size, a key position, a key recognition method, or a key mapping value based on the key usage frequency.

The control method may include obtaining tilt information of a terminal apparatus, and changing the operation UI when it is identified, based on the tilt information, that the terminal apparatus has rotated in a preset direction.

The methods according to various embodiments of the present disclosure described above may be implemented in the form of an application installable on an existing electronic apparatus.

The methods according to various embodiments of the present disclosure described above may be implemented only by a software upgrade or a hardware upgrade of an existing electronic apparatus.

The various embodiments of the present disclosure described above may also be performed through an embedded server included in an electronic apparatus or through an external server of at least one of the electronic apparatus or a display apparatus.

According to an embodiment, the above-described various embodiments may be implemented as software including instructions stored in machine-readable storage media, which can be read by machine (e.g.: computer). The machine refers to a device that calls instructions stored in a storage medium, and can operate according to the called instructions, and may include an electronic apparatus according to the aforementioned embodiments. In case an instruction is executed by a processor, the processor may perform a function corresponding to the instruction by itself, or by using other components under its control. The instruction may include a code that is generated or executed by a compiler or an interpreter. The machine-readable storage medium may be provided in the form of a non-transitory storage medium. Here, the term 'non-transitory' means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in a form of a storage medium (e.g., a compact disc read only memory (CD-ROM)) that may be read by the machine or online through an application store. In case of the online distribution, at least a portion of the computer program product may be at least temporarily stored in a storage medium such as a memory of a server of a manufacturer, a server of an application store, or a relay server or be temporarily generated.

Each of the components (for example, modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, or at least some of the operations may be performed in a different order or be omitted, or other operations may be added.

Although preferred embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. An electronic apparatus comprising:
memory;
a communication interface; and
at least one processor,
wherein the at least one processor is configured to:
based on a user input for selecting an application being received, obtain screen information provided by the application;
identify a type of the application based on the screen information provided by the application;
identify key information for controlling the application based on the type of the application;
generate an operation User Interface (UI) based on the key information; and
transmit the operation UI to a terminal apparatus through the communication interface.

2. The electronic apparatus of claim 1, wherein the at least one processor is configured to:
obtain an image frame included in the screen information;
identify at least one object included in the image frame;
determine a type of the application based on the at least one object; and
identify the key information including a key structure corresponding to the type of the application.

3. The electronic apparatus of claim 2, wherein the at least one processor is configured to:
based on a selectable object among the at least one object being identified, identify the type of the application as a first type; and
obtain the key information including a first key structure corresponding to the first type.

4. The electronic apparatus of claim 3, wherein the selectable object is a preset object representing an item selectable based on a user key input;
wherein the first type is a content viewing service type; and
wherein the first key structure includes a navigation key, a first function key for selection, and a second function key for cancellation.

5. The electronic apparatus of claim 2, wherein the at least one processor is configured to:
based on a movable object among the at least one object being identified, identify the type of the application as a second type; and
obtain the key information including a second key structure corresponding to the second type.

6. The electronic apparatus of claim 5, wherein the movable object is a preset object whose displayed position is changeable based on a user key input;
wherein the second type is a game service type; and
wherein the second key structure includes a navigation key and a plurality of function keys to which no function is mapped.

7. The electronic apparatus of claim 6, wherein the at least one processor is configured to:
obtain operation guide information corresponding to the application or log information corresponding to the application; and
identify the key information including a key mapping value of each of the plurality of function keys based on at least one of the operation guide information or the log information.

8. The electronic apparatus of claim 2, wherein the at least one processor is configured to:
obtain operation guide information corresponding to the application; and
identify the key information including at least one of a key shape, a key size, a key position, a key recognition method, or a key mapping value based on the operation guide information.

9. The electronic apparatus of claim 2, wherein the at least one processor is configured to:
obtain log information corresponding to the application;
obtain a key usage frequency based on the log information; and
identify the key information including at least one of a key shape, a key size, a key position, a key recognition method, or a key mapping value based on the key usage frequency.

10. The electronic apparatus of claim 1, wherein the at least one processor is configured to:
obtain tilt information of the terminal apparatus through the communication interface; and
based on identifying that the terminal apparatus has rotated in a preset direction based on the tilt information, change the operation UI.

11. A method of controlling an electronic apparatus, comprising:
based on a user input for selecting an application being received, obtaining screen information provided by the application;
identifying a type of the application based on the screen information provided by the application;
identifying key information for controlling the application based on the type of the application;
generating an operation User Interface (UI) based on the key information; and
transmitting the operation UI to a terminal apparatus.

12. The method of claim 11, wherein the identifying a type of the application comprises:
obtaining an image frame included in the screen information;
identifying at least one object included in the image frame;
determining a type of the application based on the at least one object; and
wherein the identifying key information comprises:
identifying the key information including a key structure corresponding to the type of the application.

13. The method of claim 12, wherein the identifying a type of the application comprises:
based on a selectable object among the at least one object being identified, identifying the type of the application as a first type; and
wherein the identifying key information comprises:
obtaining the key information including a first key structure corresponding to the first type.

14. The method of claim 13, wherein the selectable object is a preset object representing an item selectable based on a user key input;
wherein the first type is a content viewing service type; and
wherein the first key structure includes a navigation key, a first function key for selection, and a second function key for cancellation.

15. The method of claim 12, wherein the identifying a type of the application comprises:
based on a movable object among the at least one object being identified, identifying the type of the application as a second type; and
wherein the identifying key information comprises:
obtaining the key information including a second key structure corresponding to the second type.
